# EUROPEAN PATENT SPECIFICATION

(11) **EP 3 310 100 B1**
(45) Date of publication and mention of the grant of the patent: **12.08.2020**
(21) Application number: 15901492.7
(22) Date of filing: 20.08.2015
(51) Int. Cl.: H04W 48/16, H04W 48/02, H04L 29/08

(54) **WIRELESS COMMUNICATIONS ACCESS METHOD AND COMMUNICATIONS APPARATUS**
DRAHTLOSKOMMUNIKATIONSZUGANGSVERFAHREN UND KOMMUNIKATIONSAPPARAT
PROCÉDÉ D'ACCÈS DE COMMUNICATION SANS FIL ET APPAREIL DE COMMUNICATION

(43) Date of publication of application: 18.04.2018
(73) Proprietor: Huawei Technologies Co., Ltd., Longgang District Shenzhen, Guangdong 518129 (CN)
(72) Inventor: DUAN, Xiaoyan, Shenzhen Guangdong 518129 (CN); JIN, Hui, Shenzhen Guangdong 518129 (CN)
(74) Representative: Gill Jennings & Every LLP
(86) International application number: PCT/CN2015/087580
(87) International publication number: WO 2017/028288

(56) References cited:
- WO-A1-2015/042831
- WO-A1-2015/081540
- WO-A1-2017/030399
- CN-A- 102 111 882
- CN-A- 103 686 932
- CN-A- 104 703 220
- CN-A- 104 703 220
- US-A1- 2010 190 502
- US-A1- 2015 223 129

## Description

### TECHNICAL FIELD

Embodiments of the present invention relate to communications technologies, and in particular, to a wireless communications access method, a communications apparatus, a wireless terminal, and a system.

### BACKGROUND

With continuous development of mobile communications technologies, the 5th generation wireless communications system (5G, the 5th Generation wireless communication system) is to support access by multiple types of terminal devices, including an inter-personal communications device (such as a smartphone), a machine type device, an automobile, an unmanned aerial vehicle, a robot, and the like. Different terminals have different requirements on service types. A same terminal has different requirements on service types in different scenarios. For example, a smartphone initiates a voice/video call and data service in an entertainment environment, and initiates a navigation and automatic drive control service in an automotive environment. Different device types or service types have different requirements on quality of service (QoS, Quality of Service) of communication services in a mobile communications network. For example, the voice/video call and data service requires QoS of a high rate and a relatively low latency. The navigation and automatic drive control service requires QoS of a relatively high rate and an ultra-low latency.

In addition, the 5G system is to further support multiple types of access networks, for example, a 3rd Generation Partnership Project (3GPP, 3rd Generation Partnership Project) network, and a non-3rd Generation Partnership Project (such as Bluetooth or WLAN) network. There are multiple types of access nodes, for example, a base station, a terminal that supports device-to-device (D2D, Device-to-Device) communication, and a wireless access point (WAP, Wireless Access Point), in an access network. Different access nodes in an access network support different communication types, such as ultra broadband wireless communication (Ultra Broadband Wireless Communication, or referred to as enhance mobile broadband enhanced mobile broadband communication), and machine type communication (MTC, Machine Type Communication). Therefore, different types of access networks provide different QoS, and different access nodes in a same access network also provide different QoS.

In an existing wireless communications system, a terminal selects, according to a network signal status, such as signal power or signal quality, a serving cell for network access. However, the serving cell selected by the terminal may not support a particular communication type, and therefore, cannot meet a service requirement of the terminal. CN 104703220 A relates to a service request method and a service request device. The service request method and device aim to shorten the time for service request. The method of the embodiment mainly comprises the steps that a network element receives the service request of the user equipment (UE), wherein the network element is set for unified management of cells of different network types; if the network element confirms that a source cell cannot support the service request of the UE according to the service request of the UE and network resource information reported by cell management equipment of the source cell, according to network resource information reported by cell management equipment of the adjacent cell of the source cell, the network element determines at least one of the adjacent cells of the source cell, which supports the service request of the UE, and then informs the UE, so that the UE can select one from at least one adjacent cell as a target cell and sends the service request to the target cell.

WO 2015/081540 A1 discloses a redirection method and device, relating to the field of communications, thereby redirecting a user equipment in a PCH state or an FACH state and avoiding a failure in redirection, and increasing a system capacity and improving service quality. The method comprises: receiving a cell refresh request message sent in a first cell by a user equipment in a PCH state or an FACH state, the PCH state comprising a cell paging channel (CELL_PCH) and a registration area paging channel (URA_PCH), and the FACH state comprising a cell forward access channel (CELL_FACH); redirecting the user equipment to a second cell or a second frequency channel number according to a preset policy; and sending a cell update response message to the user equipment, the cell update response message comprising a frequency channel number of the second cell and scrambling code information or frequency channel number information of the second frequency channel number.

### SUMMARY

Embodiments of the present invention provide a wireless communications access method and a communications apparatus, so that terminals of different device types or service types access access nodes meeting their service requirements, and better communication quality is provided for wireless terminals.

Various aspects of the present invention are defined in the independent claims. Further technical features of each of these aspects have been defined in the respective dependent claims.

In the embodiments of the present invention as defined in the claims, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access nodes meeting their service requirements, so that better communication quality is provided for wireless terminals.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a wireless communications access method according to Embodiment 1 of the present invention;
FIG. 2 is a schematic flowchart of another wireless communications access method according to Embodiment 1 of the present invention;
FIG. 3 is a schematic flowchart of another wireless communications access method according to Embodiment 2 of the present invention;
FIG. 4 is a schematic flowchart of another wireless communications access method according to Embodiment 2 of the present invention;
FIG. 5 is a schematic diagram of information exchange between devices in another wireless communications access method according to Embodiment 2 of the present invention;
FIG. 6 is a schematic flowchart of another wireless communications access method according to Embodiment 3 of the present invention;
FIG. 7 is a schematic flowchart of another wireless communications access method according to Embodiment 3 of the present invention;
FIG. 8 is a schematic diagram of information exchange between devices in another wireless communications access method according to Embodiment 3 of the present invention;
FIG. 9 is a schematic flowchart of another wireless communications access method according to Embodiment 4 of the present invention;
FIG. 10 is a schematic flowchart of another wireless communications access method according to Embodiment 4 of the present invention;
FIG. 11 is a schematic diagram of information exchange between devices in another wireless communications access method according to Embodiment 4 of the present invention;
FIG. 12 is a schematic structural diagram of a communications apparatus according to Embodiment 5 of the present invention;
FIG. 13 is a schematic structural diagram of another communications apparatus according to Embodiment 5 of the present invention;
FIG. 14 is a schematic structural diagram of another communications apparatus according to Embodiment 5 of the present invention;
FIG. 15 is a schematic structural diagram of another communications apparatus according to Embodiment 5 of the present invention;
FIG. 16 is a schematic structural diagram of another communications apparatus according to Embodiment 5 of the present invention;
FIG. 17 is a schematic structural diagram of a wireless terminal according to Embodiment 5 of the present invention; and
FIG. 18 is a schematic structural diagram of another wireless terminal according to Embodiment 5 of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

First, wording and terms used in the embodiments are explained below.

When ordinal numbers such as "first" and "second" are mentioned in the embodiments of the present invention, it should be understood that they are used merely for distinguishing, unless they really express the meaning of a sequence according to context.

The technical solutions provided in the embodiments of the present invention are applied to a scenario in which a wireless terminal accesses a network by using a changed access node. For example, a wireless terminal initiates a registration request. After receiving the registration request of the wireless terminal that is sent by an access node, a core network device determines, according to a device type and/or a service type of the wireless terminal and a device capability of an access node that can be locally accessed by the wireless terminal, an access node whose device capability can support the device type and/or the service type of the wireless terminal as a target access node. If the determined target access node and an original access node are a same access node, the original access node continues to complete a registration transaction of the wireless terminal. If the determined target access node and the original access node are different access nodes, the target access node is instructed to substitute for the original access node to complete the registration transaction of the wireless terminal. That is, the wireless terminal switches from the original access node to the target access node for registration.

In an actual application, the wireless terminal may be multiple types of communications device that can access a wireless communications network, such as a mobile phone, a tablet computer, a smart home device, a remote medical device, and a driverless automobile.

When mentioned in the embodiments of the present invention, the "wireless communications network" means a wide area communications network that can be interconnected to another public network or private network, to enable the wireless terminal to transmit and receive information. Communication objects in the wireless communications network include the wireless terminal, one or more access nodes, and a core network device in communication connection with the access node.

When mentioned in the embodiments of the present invention, the "access node" means a network access device that provides a wireless communication link for the wireless terminal in the wireless communications network, and specifically includes an access network device or a wireless terminal device that supports device-to-device (Device-to-Device, D2D for short) communication in the wireless communications network. The access node may be an independent physical device, such as a base station, or a mobile phone that supports a D2D function, or may be software installed on a physical device.

When mentioned in the embodiments of the present invention, a "first access node" means an access node that receives a first connection request sent by the wireless terminal, that is, an access node that is accessed by the wireless terminal when the wireless terminal initiates a connection request for the first time.

When mentioned in the embodiments of the present invention, an "access node that can be accessed" means an access node that can be locally accessed by the wireless terminal.

When mentioned in the embodiments of the present invention, a "target access node" means an access node, whose device capability can support a device type and/or a service type of the wireless terminal, that can be locally accessed by the wireless terminal.

When mentioned in the embodiments of the present invention, a "second access node" means an access node that can be accessed by the wireless terminal other than the first access node, that is, another access node that can be locally accessed by the wireless terminal other than the first access node.

When mentioned in the embodiments of the present invention, a "core network device" may be a serving GPRS support node (Serving GPRS Support Node, SGSN) or a mobile switching center (Mobile Switching Center, MSC) for a 3G (the 3rd Generation of wireless communication system, the 3rd generation wireless communications system) network. For a 4G (the 4th Generation of wireless communication system, the 4th generation wireless communications system) network, the core network device may be a mobile management entity (Mobile Management Entity, MME). For a 5G network, the core network device may be a core network control device having a function equivalent to that of an MSC or an MME.

When mentioned in the embodiments of the present invention, a "connection request" means a service request initiated to a core network by the wireless terminal by using an access node, and includes a registration request, a location update request, a UE context update request, a service request, or the like. When mentioned in the embodiments of the present invention, a "first connection request" and a "second connection request" respectively mean connection requests initiated by the wireless terminal in different phases.

When mentioned in the embodiments of the present invention, a "connection response" means a response message in response to the foregoing connection request, and includes a registration response, a location update response, a UE context update response, a service request response, or the like. When mentioned in the embodiments of the present invention, a "first connection response", a "second connection response", a "third connection response", and a "fourth connection response" respectively mean response messages that are sent in response to received connection requests by the core network device in different phases or in different implementation scenarios. When mentioned in the embodiments of the present invention, a "device type" means an attribute value that is preset according to a main function of the wireless terminal. A communications device in a 5G system is not limited to a wireless terminal such as a smartphone or a tablet computer. Various communications devices having a wireless communication function, such as a smart home device, a wearable device, a driverless vehicle, and a remote medical device all access a wireless communications network of the 5G system. Different communications devices are of different device types. Different device types have different requirements on quality of service of the wireless communications network. For example, a device type of machines in a factory that perform mutual communication by using a base station disposed inside or near the factory is machine type device (Machine Type Device). A device type of a driverless vehicle is vehicle type device (Vehicle Type Device). One wireless terminal may correspond to one or more device types. For example, a mobile phone may belong to multiple device types such as communications device and vehicle type device. When mentioned in the embodiments of the present invention, a "service type" means an attribute value that is preset according to a wireless network communication quality of service requirement of a service initiated by the wireless terminal. For example, when a driverless vehicle initiates a driverless service, the driverless service has an ultra-low latency requirement on wireless network communication. Therefore, a service type of the driverless service is preset as ultra-low latency service (ultra-low latency service). For another example, for mutual communication performed by machines in a factory by using a base station inside or near the factory, a service type of such a service is preset as local machine type communication service (Local Machine Type Communication service). One wireless terminal may correspond to one or more service types. For example, when a mobile phone initiates a voice communication service, a service type of such a service is voice communication service (Voice Communication service), and when the mobile phone initiates an in-vehicle navigation service, a service type of such a service is ultra-low latency service.

When mentioned in the embodiments of the present invention, a "device capability" means a communication type that has different quality of service and that is supported by an access node or an access network served by an access node, and includes ultra reliable communication (Ultra Reliable Communication), ultra broadband communication (Ultra Broadband Communication), vehicle-to-everything communication (V2X Communication), device-to-device communication (D2D Communication), local machine type communication (Local Machine Type Communication), ultra-low latency communication (ultra-low latency Communication), or the like. One access node may support one or more device capabilities.

When mentioned in the embodiments of the present invention, a "radio access bearer" means a connection that is established for the wireless terminal by the access node and that is used for transmitting user data between the wireless terminal and a core network by using the access node. The radio access bearer (Radio access bearer) includes a bearer between the wireless terminal and the access node, and a bearer between the access node and the core network.

When mentioned in the embodiments of the present invention, a "radio bearer" means a connection that is used for transmitting user data and that is established between the wireless terminal and the access node.

The technical solutions of the present invention may be applied to various wireless communications systems, for example, a fifth generation wireless communications system, a global system for mobile communications (Global System for Mobile Communications, GSM for short), a general packet radio service (General Packet Radio Service, GPRS for short) system, a Code Division Multiple Access (Code Division Multiple Access, CDMA for short) system, a CDMA2000 system, a Wideband Code Division Multiple Access (Wideband Code Division Multiple Access, WCDMA for short) system, a Long Term Evolution (Long Term Evolution, LTE for short) system, or a World Interoperability for Microwave Access (World Interoperability for Microwave Access, WiMAX for short) system.

The following describes the technical solutions of the present invention in detail by using specific embodiments. The following specific embodiments may be mutually combined, and same or similar concepts or processes may not be repeatedly described in some embodiments.

### Embodiment 1

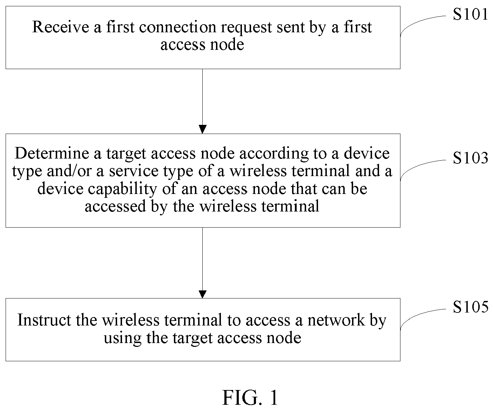

FIG. 1 is a schematic flowchart of a wireless communications access method according to Embodiment 1 of the present invention. As shown in FIG. 1, the wireless communications access method in this embodiment is performed by a core network device. The method includes the following steps:
S101: Receive a first connection request sent by a first access node.
S103: Determine a target access node according to a device type and/or a service type of a wireless terminal and a device capability of an access node that can be accessed by the wireless terminal. S105: Instruct the wireless terminal to access a network by using the target access node.

Specifically, the wireless terminal sends the first connection request to the first access node. The first access node sends the first connection request to the core network device. The first connection request carries the device type and/or the service type of the wireless terminal (that is, at least one of the device type or the service type).

Optionally, after receiving the first connection request sent by the first access node, the core network device authenticates the wireless terminal. Specifically, the first connection request may further carry an identifier of the wireless terminal. The core network device queries, by using the identifier of the wireless terminal, for user subscription data corresponding to the wireless terminal, determines, according to the subscription data, an authentication manner supported by the wireless terminal, and then authenticates the wireless terminal. Alternatively, the first connection request carries an identifier of the wireless terminal and the device type and/or the service type of the wireless terminal. The core network device determines, according to the device type and/or the service type of the wireless terminal, an authentication manner supported by the wireless terminal, and then authenticates the wireless terminal. Alternatively, the first connection request further carries an authentication manner supported by the wireless terminal and an authentication parameter.

The core network device authenticates the wireless terminal according to the authentication manner supported by the terminal and the authentication parameter. After the authentication succeeds, the core network device performs encryption and/or integrity protection for the wireless terminal according to security information supported by the wireless terminal in the subscription data, and establishes a secure connection.

After receiving the first connection request, the core network device determines the access node that can be accessed by the wireless terminal. There is at least one access node that can be accessed by the wireless terminal, that is, the first access node. Alternatively, there may be multiple access nodes that can be accessed, that is, the first access node and one or more second access nodes. Specifically, the first connection request further carries location information of the wireless terminal. The core network device determines, according to the location information of the wireless terminal, the access node that can be locally accessed by the wireless terminal, and then obtains the device capability of the access node that can be accessed by the wireless terminal. Certainly, the core network device may alternatively determine, in another manner, the access node that can be accessed by the wireless terminal. This is not specifically limited herein.

Optionally, there are multiple methods for obtaining the device capability of the access node by the core network device after determining the access node that can be locally accessed. This is not specifically limited herein. For example, the core network device obtains the device capability from access node device capability information carried in a message sent to the core network device by the access node; or obtains the device capability by querying locally stored access node device capability information; or obtains the device capability from access node device capability information stored on a core network cloud platform; or obtains the device capability from access node device capability information stored in another core network device (for example, a network configuration management device).

The device capability of the access node means a communication type that has different quality of service and that is supported by the access node or an access network served by the access node. Further, the device capability of the access node may further include a core network management capability supported by the access node, for example, a session management (Session Management) function. When the device capability of the access node includes the core network management capability, the core network device may determine, according to the core network management capability supported by the access node, signaling to be delivered to the access node. For example, if the access node supports the session management function, signaling to be sent to the access node by the core network device may carry radio access bearer related information, and may further carry session management related information to be parsed out by the access node, for example, a PDN connection context (packet data network connection context). If the access node supports in-vehicle communication, signaling to be sent to the access node by the core network device may carry in-vehicle communication session related information to be parsed out by the access node.

One access node may support one or more device capabilities. There are multiple specific representation forms. For example, a device capability status of an access node A is shown in the following table. A bit N represents a device capability, 1 represents support (support), and 0 represents not support (not support):

| **Bit 6** | **Bit 5** | **Bit 4** | **Bit 3** | **Bit 2** | **Bit 1** |
|---|---|---|---|---|---|
| 1 | 0 | 0 | 1 | 1 | 0 |

| | | | | | |
|---|---|---|---|---|---|
| Bit 6: Session Management (session management), 1-support (support); Bit 5: Ultra Reliable Communication (ultra reliable communication), 0-not support; Bit 4: Ultra Broadband Communication (ultra broadband communication), 0-not support; Bit 3: V2X Communication (vehicle-to-everything communication), 1-support; Bit 2: D2D Communication (device-to-device communication), 1-support; and Bit 1: xx Communication (xx communication), 0-not support. | | | | | |

It can be learned from the foregoing table that device capabilities of the access node A include session management, vehicle-to-everything communication, and device-to-device communication.

After obtaining the device capability of the access node, the core network device determines, according to the device type and/or the service type of the wireless terminal and the device capability of the access node that can be accessed by the wireless terminal, an access node whose device capability can support the device type and/or the service type of the wireless terminal, as a target access node from the access node that can be accessed by the wireless terminal. The core network device instructs the wireless terminal to access a wireless communications network by using the target access node.

Further, there are three manners of determining the target access node by the core network device. One of the three manners is selected for use.
1. The core network device determines, according to the device type of the wireless terminal and the device capability of the access node that can be accessed by the wireless terminal, an access node whose device capability can support the device type of the wireless terminal as the target access node from the access node that can be accessed by the wireless terminal.
   For example, a device type of a wireless terminal UE₁ is vehicle type device (Vehicle Type Device). There are two access nodes that can be accessed by UE₁: a base station A and a base station B. A device capability of the base station A is ultra broadband communication (Ultra Broadband Communication). A device capability of the base station B is vehicle-to-everything communication (V2X Communication). The device capability of the base station B can support the device type of UE₁. Therefore, the core network device determines the base station B as a target access node of UE₁.
2. The core network device determines, according to the service type of the wireless terminal and the device capability of the access node that can be accessed by the wireless terminal, an access node whose device capability can support the service type of the wireless terminal as the target access node from the access node that can be accessed by the wireless terminal.
   For example, a wireless terminal UE₁ initiates a navigation service. A service type corresponding to the navigation service is ultra-low latency service (ultra-low latency service). There are two access nodes that can be accessed by the wireless terminal UE₁: a base station C and a wireless terminal device UE₂ that supports device-to-device (Device-to-Device, D2D for short) communication. A device capability of the base station C is ultra-low latency communication (ultra-low latency Communication). A device capability of UE₂ is ultra reliable communication (Ultra Reliable Communication). The device capability of the base station C can support a service type of UE₁. Therefore, the core network device determines the base station C as a target access node of UE₁.
3. The core network device determines, according to the device type and the service type of the wireless terminal and the device capability of the access node that can be accessed by the wireless terminal, an access node whose device capability can support the device type and the service type of the wireless terminal as the target access node from the access node that can be accessed by the wireless terminal.

For example, a device type of a wireless terminal UE₁ is machine type device (Machine Type Device), and a service type of UE₁ is local machine type communication (Local Machine Type Communication). An access node that can be accessed by UE₁ is a base station D. A device capability of the base station D is local machine type communication (Local Machine Type Communication). The device capability of the base station D can support the device type and the service type of UE₁. Therefore, the core network device determines the base station D as a target access node of UE₁.

There are multiple methods for determining whether the device capability of the access node supports the device type and/or the service type of the wireless terminal, for example, presetting, in the core network device, a relationship mapping table between the device type and/or the service type of the wireless terminal and the device capability of the access node, and determining, according to the device type and/or the service type of the wireless terminal, the device capability of the access node, and the relationship mapping table, whether the device capability of the access node supports the device type and/or the service type of the wireless terminal; or matching quality of service that is required by the device type and/or the service type of the wireless terminal with quality of service that is supported by the device capability of the access node, and determining whether the device capability of the access node supports the device type and/or the service type of the wireless terminal. A specific determining method is not limited in this embodiment of the present invention.

It should be noted that when there are multiple access nodes that can be accessed by the wireless terminal, that is, when the first access node and one or more second access nodes are included, the core network device may first determine whether a device capability of the first access node supports the device type and/or the service type of the wireless terminal. If the device capability of the first access node supports the device type and/or the service type of the wireless terminal, the core network device directly determines the first access node as the target access node, and does not determine a second access node. If the device capability of the first access node does not support the device type and/or the service type of the wireless terminal, the core network device determines whether a device capability of a second access node supports the device type and/or the service type of the wireless terminal.

Alternatively, the core network device determines whether all access nodes that can be accessed by the wireless terminal support the device type and/or the service type of the wireless terminal. If there is one access node whose device capability supports the device type and/or the service type of the wireless terminal, the core network device determines the access node as the target access node. If there are multiple access nodes whose device capabilities support the device type and/or the service type of the wireless terminal, the core network device selects any access node as the target access node, or selects, as the target access node, an access node having optimal signal strength or signal quality (where signal quality is a ratio of signal strength to noise strength) when the wireless terminal accesses the access node, or selects an access node that can provide best QoS for the wireless terminal as the target access node, or directly selects the first access node as the target access node (where the device capability of the first access node supports the device type and/or the service type of the wireless terminal). A specific determining method is not limited herein.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

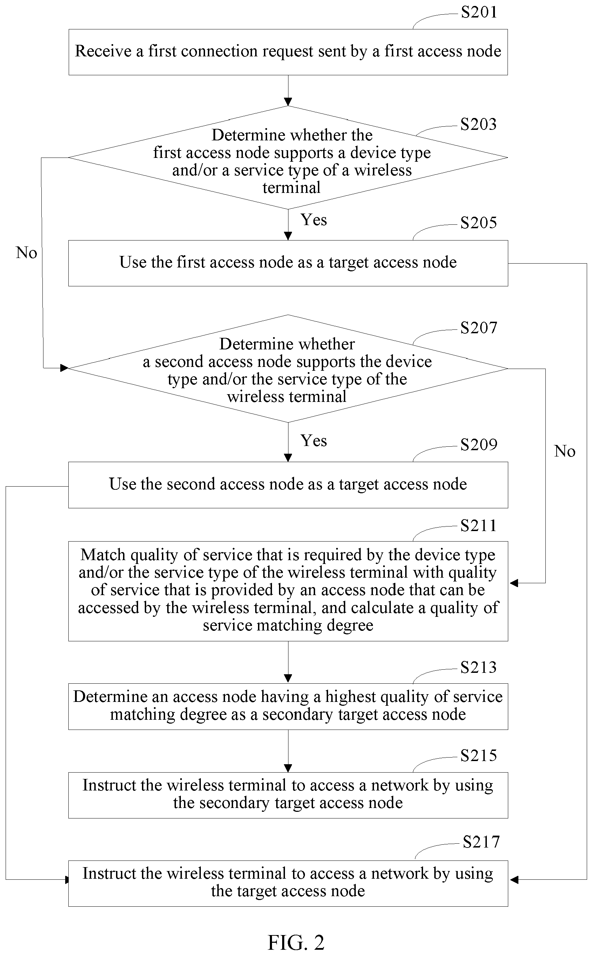

FIG. 2 is a schematic flowchart of another wireless communications access method according to Embodiment 1 of the present invention. As shown in FIG. 2, the wireless communications access method in this embodiment is performed by a core network device. The method includes the following steps.

S201: Receive a first connection request sent by a first access node.

S203: Determine, according to a device type and/or a service type of a wireless terminal and a device capability of the first access node, whether the device capability of the first access node supports the device type and/or the service type of the wireless terminal.

If the device capability of the first access node supports the device type and/or the service type of the wireless terminal, go to step S205. If the device capability of the first access node does not support the device type and/or the service type of the wireless terminal, go to step S207.

S205: Use the first access node as a target access node, and go to step S217.

S207: Determine, according to the device type and/or the service type of the wireless terminal and a device capability of a second access node, whether the device capability of the second access node supports the device type and/or the service type of the wireless terminal.

If the device capability of the second access node supports the device type and/or the service type of the wireless terminal, go to step S209. If the device capability of the second access node does not support the device type and/or the service type of the wireless terminal, go to step S211.

S209: Use the second access node as the target access node, and go to step S217.

S211: Match quality of service that is required by the device type and/or the service type of the wireless terminal with quality of service that is provided by the access node that can be accessed by the wireless terminal, and calculate a quality of service matching degree.

S213: Determine an access node having a highest quality of service matching degree as a secondary target access node, and go to step S215.

S215: Instruct the wireless terminal to access a network by using the secondary target access node.

S217: Instruct the wireless terminal to access a network by using the target access node.

Specifically, the wireless terminal sends the first connection request to the first access node. The first connection request carries the device type and/or the service type of the wireless terminal. The first access node forwards the first connection request to the core network device. The first access node may add the device capability of the first access node to the first connection request, and send the first connection request to the core network device.

In one aspect, after receiving the first connection request sent by the first access node, the core network device authenticates the wireless terminal. Specifically, the first connection request may carry an identifier of the wireless terminal. The core network device queries, by using the identifier of the wireless terminal, for user subscription data corresponding to the wireless terminal, determines, according to the subscription data, an authentication manner supported by the wireless terminal, and then authenticates the wireless terminal. Alternatively, the first connection request carries the device type and/or the service type of the wireless terminal. The core network device determines, according to the device type and/or the service type of the wireless terminal, an authentication manner supported by the wireless terminal, and then authenticates the wireless terminal. Alternatively, the first connection request carries an authentication manner supported by the wireless terminal and an authentication parameter. The core network device authenticates the wireless terminal according to the authentication manner supported by the terminal and the authentication parameter. After the authentication succeeds, the core network device performs encryption and/or integrity protection on the wireless terminal, and establishes a secure connection. In another aspect, after receiving the first connection request sent by the first access node, the core network device obtains the device capability of the first access node. There are multiple specific obtaining methods. For example, the core network device queries a device capability of an access node prestored in a core network server for the device capability of the first access node according to an identifier of the first access node. Alternatively, when the first access node forwards the first connection request sent by the wireless terminal, the first access node adds the device capability of the first access node to the first connection request, and sends the first connection request to the core network device. This embodiment does not limit a specific manner of obtaining the device capability of the first access node by the core network device.

Further, the device capability of the access node includes communication types that have different quality of service and that are supported by the access node, and further includes a core network management capability supported by the access nodedevice capability, for example, a session management function (Session Management). When the device capability of the access node includes the core network management capability, the core network device may determine, according to the core network management capability supported by the access node, signaling to be delivered to the access node. For example, if the access node supports the session management function, signaling to be sent to the access node by the core network device may carry radio access bearer related information, and may further carry session management related information to be parsed out by the access node, for example, a PDN connection context (packet data network connection context). If the access node supports in-vehicle communication, signaling to be sent to the access node by the core network device may carry in-vehicle communication session related information to be parsed out by the access node.

The core network device determines, according to the device type and/or the service type of the wireless terminal and the device capability of the first access node, whether the first access node supports the device type and/or the service type of the wireless terminal. There are three specific determining manners: determining, according to the device type of the wireless terminal and the device capability of the first access node, whether the first access node supports the device type of the wireless terminal; or determining, according to the service type of the wireless terminal and the device capability of the first access node, whether the first access node supports the service type of the wireless terminal; or determining, according to the device type and the service type of the wireless terminal and the device capability of the first access node, whether the first access node supports the device type and the service type of the wireless terminal. A specific manner is similar to the determining manner in the foregoing embodiment, and details are not described herein again. If the device capability of the first access node supports the device type and/or the service type of the wireless terminal, the first access node is determined as the target access node. That is, the wireless terminal continues to access the first access node, and does not need to change the access node.

If the device capability of the first access node does not support the device type and/or the service type of the wireless terminal, it is further determined whether an access node that can be accessed by the wireless terminal other than the first access node supports the device type and/or the service type of the wireless terminal. That is, it is determined whether the second access node supports the device type and/or the service type of the wireless terminal.

Further, the core network device obtains in advance the device capability of the second access node. A specific manner of obtaining the device capability of the second access node is as follows: The first connection request further carries location information of the wireless terminal. The core network device determines, according to the location information of the wireless terminal, another access node that can be accessed by the wireless terminal, that is, determines the second access node, and then obtains the device capability of the second access node.

There may be one or more second access nodes. When there are multiple second access nodes, it is determined whether a device capability of each second access node supports the device type and/or the service type of the wireless terminal.

There are three manners of determining whether the device capability of the second access node supports the device type and/or the service type of the wireless terminal: determining, according to the device type of the wireless terminal and the device capability of the second access node, whether the second access node supports the device type of the wireless terminal; or determining, according to the service type of the wireless terminal and the device capability of the second access node, whether the second access node supports the service type of the wireless terminal; or determining, according to the device type and the service type of the wireless terminal and the device capability of the second access node, whether the second access node supports the device type and the service type of the wireless terminal. A specific manner is similar to the determining manner in the foregoing embodiment, and details are not described herein again.

If the second access node supports the device type and/or the service type of the wireless terminal, the second access node is determined as the target access node. The wireless terminal is instructed to access a wireless communications network by using the second access node. In this case, the wireless terminal needs to switch from the first access node to the second access node to access the network.

Further, if there are multiple second access nodes that support the device type and/or the service type of the wireless terminal, there are multiple manners of determining a second access node as the target access node, for example, selecting any second access node as the target access node; or obtaining a measurement report on measurement on the multiple second access nodes by the wireless terminal, and selecting, as the target access node according to the measurement report, a second access node from which the wireless terminal receives a signal having strongest signal strength or best signal quality. A manner of determining the target access node when there are multiple second access nodes that support the device type and/or the service type of the wireless terminal is not limited in this embodiment of the present invention.

If neither the first access node nor the second access node supports the device type and/or the service type of the wireless terminal, it indicates that there is no access node that supports the device type and/or the service type of the wireless terminal. The device type and/or the service type of the wireless terminal is matched with quality of service that is provided by the access node that can be accessed, and an access node having a highest quality of service matching degree is determined as a secondary target access node. The wireless terminal is instructed to access the network by using the access node having the highest quality of service matching degree. If the access node having the highest quality of service matching degree is the first access node, the wireless terminal continues to access the network by using the first access node, and does not need to change the access node. If the access node having the highest quality of service matching degree is the second access node, the wireless terminal accesses the network by using the second access node. That is, the wireless terminal needs to switch from the first access node to the second access node to access the network. A performing method for instructing, by the core network device, the wireless terminal to access the wireless network by using the secondary target access node may be the same as the performing method for instructing, by the core network device, the wireless terminal to access the wireless network by using the target access node.

It should be noted that, when the first access node does not support the device type and/or the service type of the wireless terminal, and there is no other access node that can be accessed by the wireless terminal, that is, there is no second access node, it also indicates that there is no access node that supports the device type and/or the service type of the wireless terminal. In this case, the device type and/or the service type of the wireless terminal may be matched with quality of service that is provided by the access node that can be accessed, and the access node having the highest quality of service matching degree is determined as a secondary target access node for access by the wireless terminal, or the terminal continues to access the network by using the first access node.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

### Embodiment 2

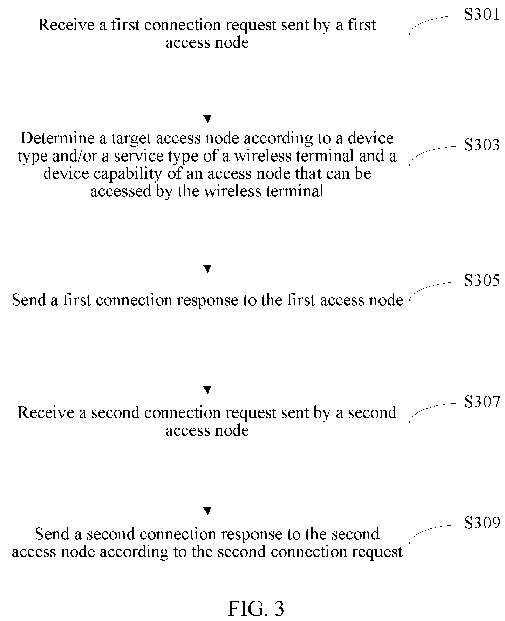

FIG. 3 is a schematic flowchart of another wireless communications access method according to Embodiment 2 of the present invention. As shown in FIG. 3, the wireless communications access method in this embodiment is performed by a core network device. The method includes the following steps.

S301: Receive a first connection request sent by a first access node.

The first connection request carries a device type and/or a service type of a wireless terminal. S303: Determine a target access node according to a device type and/or a service type of the wireless terminal and a device capability of an access node that can be accessed by the wireless terminal.

The core network device determines, according to the device type and/or the service type of the wireless terminal and the device capability of the access node that can be accessed by the wireless terminal, a second access node whose device capability can support the device type and/or the service type of the wireless terminal as the target access node. For a process of performing step 301 and step 303, refer to a corresponding method step in the foregoing embodiment. Specific implementation processes are basically the same. Details are not described herein again. Optionally, after receiving the first connection request sent by the first access node, the core network device authenticates the wireless terminal. Specifically, the first connection request may carry an identifier of the wireless terminal. The core network device queries, by using the identifier of the wireless terminal, for user subscription data corresponding to the wireless terminal, determines, according to the subscription data, an authentication manner supported by the wireless terminal, and then authenticates the wireless terminal. Alternatively, the first connection request carries the device type and/or the service type of the wireless terminal. The core network device determines, according to the device type and/or the service type of the wireless terminal, an authentication manner supported by the wireless terminal, and then authenticates the wireless terminal. Alternatively, the first connection request carries an authentication manner supported by the wireless terminal and an authentication parameter. The core network device authenticates the wireless terminal according to the authentication manner supported by the terminal and the authentication parameter. After the authentication succeeds, the core network device performs encryption and/or integrity protection for the wireless terminal according to security information supported by the wireless terminal in the subscription data, and establishes a secure connection. The core network device instructs the wireless terminal to access a wireless communications network by using the second access node. Therefore, the wireless terminal needs to switch from the first access node to the second access node to access the network. Specifically, the core network device performs the following steps.

S305: Send a first connection response to the first access node.

The first connection response is a response message of the core network device in response to the first connection request, and carries redirection information for instructing the wireless terminal to connect to the second access node.

S307: Receive a second connection request sent by the second access node.

The second connection request is a connection request that is re-initiated by the wireless terminal to the second access node according to the redirection information carried in the first connection response. The second connection request and the first connection request belong to a same connection request transaction. After receiving the second connection request, the second access node forwards the second connection request to the core network device.

S309: Send a second connection response to the second access node according to the second connection request.

The second connection response is a response message of the core network device in response to the second connection request.

Specifically, after determining, according to the device type and/or the service type of the wireless terminal and the device capability of the access node that can be accessed by the wireless terminal, the second access node as the target access node, the core network device sends, to the first access node, the first connection response that carries the redirection information for instructing the wireless terminal to connect to the second access node. The redirection information includes an identifier of the second access node.

After receiving the first connection response that carries the redirection information, the first access node sends the first connection response to the wireless terminal. Further, the first connection response may further carry an identifier indicating that the first access node rejects the first connection request of the wireless terminal.

After receiving the first connection response, the wireless terminal determines, according to the redirection information carried in the first connection response, that the wireless terminal needs to access the network by using the second access node. The wireless terminal sends the second connection request to the second access node according to the redirection information. The second connection request may carry the device type and/or the service type of the wireless terminal. Alternatively, it may be determined, according to the redirection information, that the second access node is a redirected target access node, and it is determined not to add the device type and/or the service type of the wireless terminal to the second access node, to reduce signaling overheads.

The second access node forwards the second connection request to the core network device. Optionally, after receiving the second connection request, the second access node may be set by default in such a manner that a behavior mode of the second access node is the same as that of the first access node. That is, the second access node adds the device capability of the second access node to the second connection request, and sends the second connection request to the core network device.

Further, the wireless terminal may add, to the second connection request, a transaction identifier indicating that the second connection request and the first connection request belong to a same connection transaction. In this way, the second access node determines, according to the transaction identifier, that the second connection request is a redirected terminal connection request, and does not need to add the device capability of the second access node to the second connection request and send the second connection request to the core network device. Alternatively, the core network device determines, according to the transaction identifier, that the second connection request is a redirected terminal connection request, and the core network device does not need to determine again the target access node for the wireless terminal that sends the second connection request. The transaction identifier may be replaced by indication information indicating that the second access node is the target access node, or indication information indicating that the core network device does not need to perform an operation of determining the target access node.

After receiving the second connection request, the core network device respectively performs the following different processing according to different specific transactions in the connection request.
1. When the second connection request is a registration request, after receiving the second connection request, the core network device establishes a bearer for the wireless terminal, and stores a terminal context.
   The core network device registers the wireless terminal, and establishes a bearer for the wireless terminal. The bearer is a bearer between interior gateways of a core network (for example, a serving gateway S-GW and a packet data network gateway PDN GW in a 4G network). Specifically, the core network device obtains subscription data of the wireless terminal, determines whether there is QoS corresponding to the device type and/or the service type of the wireless terminal in the subscription data, and if there is corresponding QoS, establishes a bearer for the wireless terminal according to the corresponding QoS. If there is no corresponding QoS, the core network device determines QoS according to the device type and/or the service type of the wireless terminal, and then establishes a bearer. Alternatively, the core network device determines QoS directly according to the device type and/or the service type of the wireless terminal, and establishes a bearer. The QoS may be QoS of a non-guaranteed bit rate (Non-GBR: Non-Guaranteed Bit Rate), or may be QoS of a guaranteed bit rate (GBR: Non-Guaranteed Bit Rate), that is, the bearer may be a GBR bearer or a non-GBR bearer.
2. When the second connection request is a location update request, a terminal context update request, or a service request, the core network device completes location updating, terminal context updating, or a service request of the wireless terminal according to the second connection request. Because the core network device has established a bearer for the wireless terminal, no bearer needs to be reestablished.

The core network device sends a second connection response in response to the second connection request to the second access node. The second connection response is used to indicate that the core network device accepts the second connection request of the wireless terminal. The second connection response respectively carries different information according to different specific transactions in the connection request.
1. When the second connection request is a registration request, the second connection response carries configuration information, determined by the core network device, for establishing a radio access bearer for the wireless terminal by the second access node, so that the second access node establishes a radio access bearer for the wireless terminal according to the configuration information for establishing a radio access bearer for the wireless terminal that is carried in the second connection response.
   Alternatively, the second connection response carries only indication information indicating that the core network device accepts the registration request of the wireless terminal, and does not carry the configuration information for establishing a radio access bearer for the wireless terminal. After receiving the second connection response, the second access node notifies the wireless terminal that the registration request of the wireless terminal has been accepted by the core network device, and temporarily, a radio access bearer and a radio bearer that is used for data transmission are not established.
2. When the second connection request is a location update request or a terminal context update request, the second connection response carries information indicating that the core network device accepts the location update request or the terminal context update request, and configuration information, determined by the core network device, for establishing a radio access bearer for the wireless terminal by the second access node, so that the second access node establishes a radio access bearer for the wireless terminal according to the configuration information for establishing a radio access bearer for the wireless terminal that is carried in the second connection response. Alternatively, the second connection response carries information indicating that the core network device accepts the location update request or the terminal context update request, so that after receiving the second connection response, the second access node notifies the wireless terminal that the location update request or the terminal context update request of the wireless terminal has been accepted by the core network device, and temporarily, a radio access bearer and a radio bearer that is used for data transmission are not established.
3. When the second connection request is a service request, the second connection response carries configuration information, determined by the core network device, for establishing a radio access bearer for the wireless terminal by the second access node, so that the second access node establishes a radio bearer that is used for data transmission and a radio access bearer for the wireless terminal according to the configuration information for establishing a radio access bearer for the wireless terminal that is carried in the second connection response.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

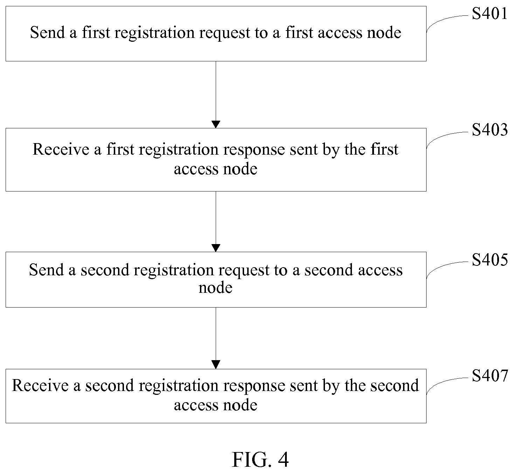

FIG. 4 is a schematic flowchart of another wireless communications access method according to Embodiment 2 of the present invention. As shown in FIG. 4, the wireless communications access method in this embodiment is performed by a wireless terminal. An application scenario in this embodiment is a registration scenario. The method includes the following steps.

S401: Send a first registration request to a first access node.

The first registration request is a registration request initiated by the wireless terminal to a core network device, and carries at least one of a device type or a service type of the wireless terminal. Specifically, the first registration request may be an attach request message.

S403: Receive a first registration response that is sent by the first access node and that is in response to the first registration request.

The first registration response is a response message of the core network device in response to the first registration request, and carries registration redirection information for instructing the wireless terminal to connect to a second access node whose device capability can support the device type and/or the service type of the wireless terminal, for registration. Specifically, the first registration response further includes an identifier of the second access node. The second access node is an access node, whose device capability can support the device type and/or the service type of the wireless terminal, that can be accessed by the wireless terminal.

S405: Send a second registration request to the second access node according to the registration redirection information.

The second registration request and the first registration request belong to a same registration transaction. The wireless terminal accesses the second access node according to the redirection information. Optionally, the second registration request carries a transaction identifier indicating that the second registration request and the first registration request belong to a same registration transaction.

S407: Receive a second registration response that is sent by the second access node and that is in response to the second registration request, and complete a registration process.

The second registration response is a response message of the core network device in response to the second registration request.

Specifically, the second registration response carries configuration information, determined by the core network device, for establishing a radio access bearer for the wireless terminal by the second access node, so that the second access node establishes a radio access bearer for the wireless terminal according to the configuration information, determined by the core network device, for establishing a radio access bearer for the wireless terminal by the second access node that is carried in the second registration response. A radio bearer used for data transmission is established between the wireless terminal and the second access node. A registration process is completed. Alternatively, the second registration response carries only a terminal identifier and indication information that indicates that the core network device has accepted the registration request of the wireless terminal, and does not carry the configuration information for establishing a radio access bearer for the wireless terminal. After receiving the second registration response, the second access node maintains a signaling connection to the wireless terminal, a registration process is completed, and temporarily, a radio bearer used for data transmission is not established.

Optionally, after establishing the radio bearer between the wireless terminal and the second access node, the wireless terminal further sends, to the first access node, a registration information deletion request for instructing to delete registration information. The first access node deletes registration information of the wireless terminal according to the registration information deletion request. Optionally, the wireless terminal may not send the registration information deletion request to the first access node. A timer used to calculate a message sending interval of the wireless terminal is preset in the first access node. If the first access node fails to receive, in a preset period of time, any message sent by the wireless terminal, the first access node directly deletes the registration information of the wireless terminal.

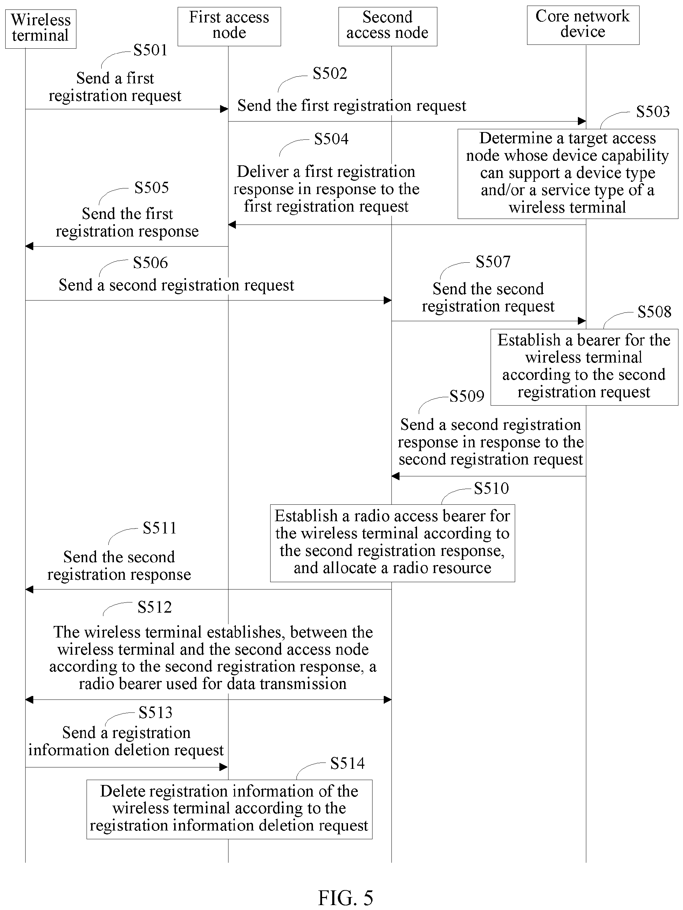

FIG. 5 is a schematic diagram of information exchange between devices in another wireless communications access method according to Embodiment 2 of the present invention. As shown in FIG. 5, information exchange devices in this embodiment include a wireless terminal, a first access node, a second access node, and a core network device. An application scenario in this embodiment is a registration scenario. The method includes the following steps.

S501: A wireless terminal sends a first registration request to a first access node.

The first registration request is a registration request initiated by the wireless terminal to a core network device, and carries at least one of a device type or a service type of the wireless terminal. S502: The first access node sends the first registration request to a core network device.

S503: The core network device determines, according to a device type and/or a service type of the wireless terminal and a device capability of an access node that can be accessed by the wireless terminal, a target access node whose device capability can support the device type and/or the service type of the wireless terminal.

The target access node is a second access node. For a process of performing step S503, refer to a corresponding method step in the foregoing embodiment. Specific implementation processes are basically the same. Details are not described herein again.

S504: The core network device delivers a first registration response in response to the first registration request to the first access node.

The first registration response carries registration redirection information for instructing the wireless terminal to connect to the second access node whose device capability can support the device type and/or the service type of the wireless terminal, for registration. Specifically, the first registration response further includes an identifier of the second access node. The second access node is an access node, whose device capability can support the device type and/or the service type of the wireless terminal, that can be accessed by the wireless terminal.

S505: The first access node sends the first registration response to the wireless terminal.

S506: The wireless terminal sends a second registration request to a second access node according to registration redirection information carried in the first registration response.

The second registration request and the first registration request belong to a same registration transaction.

S507: The second access node sends the second registration request to the core network device.

S508: The core network device establishes a bearer for the wireless terminal according to the second registration request.

S509: The core network device sends a second registration response in response to the second registration request to the second access node.

Specifically, the second registration response may carry configuration information used by the core network device to request the second access node to establish a radio access bearer for the wireless terminal.

S510: The second access node establishes a radio access bearer for the wireless terminal according to the second registration response, and allocates a radio resource.

Specifically, the second access node establishes a radio access bearer for the wireless terminal according to the configuration information for establishing a radio access bearer for the wireless terminal that is carried in the second registration response, and allocates a radio resource.

S511: The second access node sends the second registration response to the wireless terminal.

The second registration response carries radio resource configuration information of the radio access bearer.

S512: The wireless terminal establishes, between the wireless terminal and the second access node according to the second registration response, a radio bearer used for data transmission.

S513: The wireless terminal sends, to the first access node, a registration information deletion request for instructing to delete registration information.

S514: The first access node deletes registration information of the wireless terminal according to the registration information deletion request.

Specifically, a wireless terminal sends a first registration request carrying a device type and/or a service type of the wireless terminal to a first access node. The first access node forwards the first registration request to a core network device. Optionally, the first access node adds a device capability of the first access node to the first registration request, and sends the first registration request to the core network device.

The core network device determines, according to a device capability of an access node that can be accessed by the wireless terminal and the device type and/or the service type of the wireless terminal, a target access node whose device capability can support the device type and/or the service type of the wireless terminal. The target access node is a second access node.

The core network device sends a first registration response in response to the first registration request to the first access node. The first registration response carries registration redirection information for instructing the wireless terminal to connect to the second access node for registration. Optionally, the first registration response further includes an identifier of the second access node used as the target access node.

The first access node forwards the first registration response to the wireless terminal. The wireless terminal sends a second registration request to the second access node according to the registration redirection information carried in the first registration response. The second registration request may carry the device type and/or the service type of the wireless terminal. Alternatively, the wireless terminal determines, according to the registration redirection information, that the second access node is an access node whose device capability can support the device type and/or the service type of the wireless terminal. Therefore, the core network device does not need to determine again the access node for the device type and/or the service type. To reduce signaling overheads, the wireless terminal may not add the device type and/or the service type of the wireless terminal to the second registration request.

The second access node forwards the second registration request to the core network device, so that the core network device registers the wireless terminal according to the second registration request, establishes a core network side bearer, and sends a second registration response to the second access node. Optionally, the second registration response carries configuration information, determined by the core network device, for establishing a radio access bearer for the wireless terminal by the second access node.

After the second access node receives the second registration response, if the second registration response carries the configuration information for establishing a radio access bearer for the wireless terminal, the second access node establishes a radio access bearer for the wireless terminal, and allocates a radio resource.

The second access node sends the second registration response to the wireless terminal. The wireless terminal establishes a radio bearer between the wireless terminal and the second access node according to the second registration response. Specifically, the second access node adds, to the second registration response, radio resource configuration information of the radio access bearer established for the wireless terminal by the second access node. The wireless terminal establishes a radio bearer between the wireless terminal and the second access node according to the radio resource configuration information of the radio access bearer.

Optionally, after establishing the radio bearer between the wireless terminal and the second access node, the wireless terminal sends, to the first access node, a registration information deletion request for instructing to delete registration information. The first access node deletes registration information of the wireless terminal according to the registration information deletion request. Optionally, the wireless terminal may not send the registration information deletion request to the first access node. A timer used to calculate a message sending interval of the wireless terminal is preset in the first access node. If the first access node fails to receive, in a preset period of time, any message sent by the wireless terminal, the first access node directly deletes the registration information of the wireless terminal.

Further, the second registration request carries a transaction identifier indicating that the second registration request and the first registration request belong to a same registration transaction, so that the second access node determines, according to the transaction identifier, that the second registration request is a redirected terminal registration request, and the core network device determines, according to the transaction identifier, that the second registration request is a redirected terminal registration request. Therefore, the core network device does not need to determine again the target access node for the wireless terminal that sends the second registration request.

In this embodiment of the present invention, a wireless terminal sends a first registration request to a first access node. The first access node forwards the first registration request to a core network device. The core network device determines, for the wireless terminal, a second access node whose device capability can support a device type and/or a service type of the wireless terminal as a target access node. The wireless terminal re-accesses a wireless communications network according to an indication of the core network device by using the second access node. Terminals of different device types or service types access access nodes meeting their service requirements, so that better communication quality is provided for wireless terminals.

### Embodiment 3

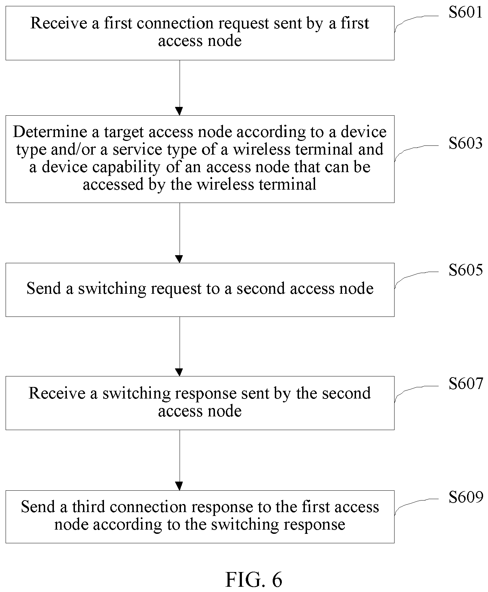

FIG. 6 is a schematic flowchart of another wireless communications access method according to Embodiment 3 of the present invention. As shown in FIG. 6, the wireless communications access method in this embodiment is performed by a core network device. The method includes the following steps.

S601: Receive a first connection request sent by a first access node.

The first connection request carries a device type and/or a service type of a wireless terminal. S603: Determine a target access node according to a device type and/or a service type of the wireless terminal and a device capability of an access node that can be accessed by the wireless terminal.

The core network device determines a target access node according to the device type and/or the service type of the wireless terminal and the device capability of the access node that can be accessed by the wireless terminal. The target access node is a second access node whose device capability can support the device type and/or the service type of the wireless terminal. For a process of performing step 601 and step 603, refer to a corresponding method step in the foregoing embodiment. Specific implementation processes are basically the same. Details are not described herein again.

Optionally, after receiving the first connection request sent by the first access node, the core network device authenticates the wireless terminal. Specifically, the first connection request may carry an identifier of the wireless terminal. The core network device queries, by using the identifier of the wireless terminal, for user subscription data corresponding to the wireless terminal, determines, according to the subscription data, an authentication manner supported by the wireless terminal, and then authenticates the wireless terminal. Alternatively, the first connection request carries the device type and/or the service type of the wireless terminal. The core network device determines, according to the device type and/or the service type of the wireless terminal, an authentication manner supported by the wireless terminal, and then authenticates the wireless terminal. Alternatively, the first connection request carries an authentication manner supported by the wireless terminal and an authentication parameter. The core network device authenticates the wireless terminal according to the authentication manner supported by the terminal and the authentication parameter. After the authentication succeeds, the core network device performs encryption and/or integrity protection for the wireless terminal according to security information supported by the wireless terminal in the subscription data, and establishes a secure connection. Optionally, after determining the second access node whose device capability can support the device type and/or the service type of the wireless terminal as the target access node, the core network device respectively performs the following different processing according to different specific transactions in the connection request.
1. When the first connection request is a registration request, after receiving the first connection request, the core network device establishes a bearer for the wireless terminal, and stores a terminal context.
   The core network device registers the wireless terminal, and establishes a bearer for the wireless terminal. The bearer is a bearer between interior gateways of a core network (for example, a serving gateway S-GW and a packet data network gateway PDN GW in a 4G network). Specifically, the core network device obtains subscription data of the wireless terminal, determines whether there is QoS corresponding to the device type and/or the service type of the wireless terminal in the subscription data, and if there is corresponding QoS, establishes a bearer for the wireless terminal according to the corresponding QoS. If there is no corresponding QoS, the core network device determines QoS according to the device type and/or the service type of the wireless terminal, and then establishes a bearer. Alternatively, the core network device determines QoS directly according to the device type and/or the service type of the wireless terminal, and establishes a bearer. The QoS may be QoS of a non-guaranteed bit rate (Non-GBR: Non-Guaranteed Bit Rate), or may be QoS of a guaranteed bit rate (GBR: Non-Guaranteed Bit Rate), that is, the bearer may be a GBR bearer or a non-GBR bearer.
2. When the first connection request is a location update request, a terminal context update request, or a service request, because the core network device has established a bearer for the wireless terminal, no bearer needs to be reestablished.

The core network device instructs the wireless terminal to access a wireless communications network by using the second access node. Therefore, the wireless terminal needs to switch from the first access node to the second access node to access the network. Specifically, the core network device performs the following steps.

S605: Send a handover request to the second access node.

The handover request carries configuration information, determined by the core network device, for establishing a radio access bearer for the wireless terminal by the second access node, so that the second access node establishes a radio access bearer for the wireless terminal according to the radio access bearer configuration information.

Optionally, the handover request further carries terminal context information. The terminal context information includes an identifier of the terminal, the device type and/or the service type of the terminal, a security parameter of the terminal, or the like.

Optionally, the handover request further carries a registration indication for instructing the second access node to accept registration by the wireless terminal. The registration indication is used to indicate, to the second access node, that the handover request is sent for registration.

S607: Receive a handover response sent by the second access node.

The second access node establishes a radio access bearer for the wireless terminal according to the configuration information for establishing a radio access bearer for the wireless terminal that is carried in the handover request, adds radio resource configuration information of the radio access bearer to the handover response, and sends the handover response to the core network device, so that the wireless terminal establishes a radio bearer between the wireless terminal and the second access node according to the radio resource configuration information.

S609: Send a third connection response to the first access node according to the handover response. The third connection response is a response message of the core network device in response to the first connection request, and carries a handover indication for instructing the wireless terminal to switch to the second access node and the radio resource configuration information of the radio access bearer established for the wireless terminal by the second access node. The first access node forwards the handover response to the wireless terminal. The wireless terminal establishes a radio bearer between the wireless terminal and the second access node according to the handover indication and the radio resource configuration information of the radio access bearer established for the wireless terminal by the second access node.

In this embodiment of the present invention, a wireless terminal sends a first registration request to a first access node. The first access node forwards the first registration request to a core network device. The core network device determines, for the wireless terminal, a second access node whose device capability can support a device type and/or a service type of the wireless terminal as a target access node. The wireless terminal re-accesses a wireless communications network according to an indication of the core network device by using the second access node. Terminals of different device types or service types access access nodes meeting their service requirements, so that better communication quality is provided for wireless terminals.

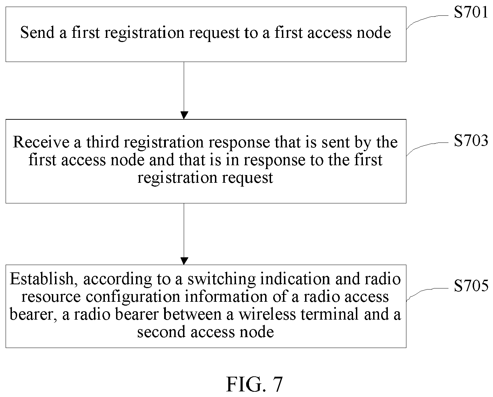

FIG. 7 is a schematic flowchart of another wireless communications access method according to Embodiment 3 of the present invention. As shown in FIG. 7, the wireless communications access method in this embodiment is performed by a wireless terminal. The method includes the following steps.

S701: Send a first registration request to a first access node.

The first registration request carries a device type and/or a service type of the wireless terminal. S703: Receive a third registration response that is sent by the first access node and that is in response to the first registration request.

The third registration response carries a registration handover indication for instructing the wireless terminal to switch to a second access node whose device capability can support the device type and/or the service type of the wireless terminal, and radio resource configuration information of a radio access bearer established for the wireless terminal by the second access node.

S705: Establish, according to the registration handover indication and radio resource configuration information of the radio access bearer, a radio bearer between the wireless terminal and the second access node.

Specifically, a wireless terminal sends a first registration request that carries a device type and/or a service type of the wireless terminal to a first access node. The first access node forwards the first registration request to a core network device. The core network device determines a target access node for the wireless terminal according to the device type and/or the service type of the wireless terminal in the first registration request. The target access node is a second access node whose device capability can support the device type and/or the service type of the wireless terminal.

The first access node receives a third registration response that is delivered by the core network device and that is in response to the first registration request, and forwards the third registration response to the wireless terminal. The third registration response carries a handover indication and radio resource configuration information of a radio access bearer established for the wireless terminal by the second access node.

The wireless terminal establishes, according to the handover indication and the radio resource configuration information of the radio access bearer, a radio bearer between the wireless terminal and the second access node.

Optionally, after establishing the radio bearer between the wireless terminal and the second access node, the wireless terminal sends, to the first access node, a registration information deletion request for instructing to delete registration information. The first access node deletes registration information of the wireless terminal according to the registration information deletion request. Optionally, the wireless terminal may not send the registration information deletion request to the first access node. A timer used to calculate a message sending interval of the wireless terminal is preset in the first access node. If the first access node fails to receive, in a preset period of time, any message sent by the wireless terminal, the first access node directly deletes the registration information of the wireless terminal.

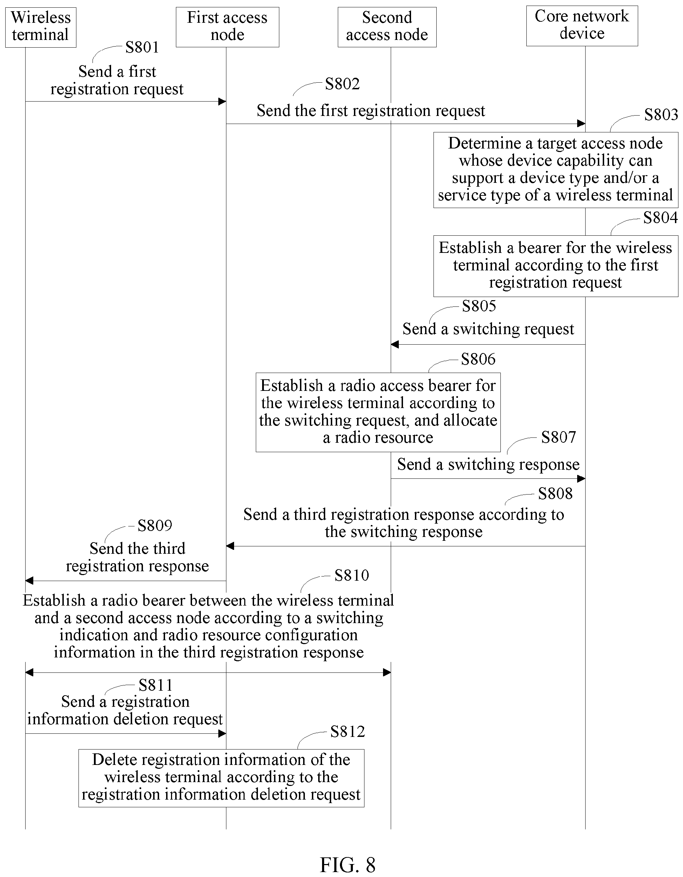

FIG. 8 is a schematic diagram of information exchange between devices in another wireless communications access method according to Embodiment 3 of the present invention. As shown in FIG. 8, information exchange devices in this embodiment include a wireless terminal, a first access node, a second access node, and a core network device. An application scenario in this embodiment is a registration scenario. The method includes the following steps.

S801: A wireless terminal sends a first registration request to a first access node.

The first registration request is a registration request initiated by the wireless terminal to a core network device, and carries at least one of a device type or a service type of the wireless terminal. S802: The first access node sends the first registration request to a core network device.

S803: The core network device determines, according to a device type and/or a service type of the wireless terminal and a device capability of an access node that can be accessed by the wireless terminal, a target access node whose device capability can support the device type and/or the service type of the wireless terminal.

The target access node is a second access node. For a process of performing step S803, refer to a corresponding method step in the foregoing embodiment. Specific implementation processes are basically the same. Details are not described herein again.

S804: The core network device establishes a bearer for the wireless terminal according to the first registration request.

Specifically, the core network device establishes a core network side bearer for the wireless terminal according to the first registration request.

S805: The core network device sends a handover request to a second access node.

The handover request carries configuration information for requesting the second access node to establish a radio access bearer for the wireless terminal.

Optionally, the handover request further carries terminal context information. The terminal context information includes an identifier of the terminal, the device type and/or the service type of the terminal, a security parameter of the terminal, or the like.

Optionally, the handover request further carries a registration indication for instructing the second access node to accept registration by the wireless terminal. The registration indication is used to indicate, to the second access node, that the handover request is sent for registration.

S806: The second access node establishes a radio access bearer for the wireless terminal according to the handover request, and allocates a radio resource.

S807: The second access node sends a handover response to the core network device.

The handover response carries radio resource configuration information of the radio access bearer that is established for the wireless terminal by the second access node according to the radio access bearer configuration information.

S808: The core network device sends a third registration response to the first access node according to the handover response.

The third registration response carries a handover indication for instructing the wireless terminal to switch to the second access node and radio resource configuration information of the radio access bearer established for the wireless terminal by the second access node.

S809: The first access node sends the third registration response to the wireless terminal.

S810: The wireless terminal establishes a radio bearer between the wireless terminal and the second access node according to the handover indication and the radio resource configuration information of the radio access bearer established for the wireless terminal by the second access node in the third registration response.

S811: The wireless terminal sends, to the first access node, a registration information deletion request for instructing to delete registration information.

S812: The first access node deletes registration information of the wireless terminal according to the registration information deletion request.

Specifically, a wireless terminal sends a first registration request to a first access node. The first access node forwards the first registration request to a core network device. The core network device determines a target access node according to a device type and/or a service type of the wireless terminal that is carried in the first registration request and a device capability of an access node that can be accessed by the wireless terminal. The target access node is a second access node. The core network device establishes, according to the device type and/or the service type in the registration request, a core network side bearer that meets quality of service that is required by the device type and/or the service type of the wireless terminal, and stores a terminal context.

After determining the second access node as the target access node, the core network device sends a handover request to the second access node, so that the second access node establishes a radio access bearer for the wireless terminal according to configuration information, carried in the handover request, for establishing a radio access bearer for the wireless terminal, and sends a handover response to the core network device.

The core network device obtains, according to the handover response, radio resource configuration information of the radio access bearer established for the wireless terminal by the second access node that is carried in the handover response. The radio resource configuration information of the radio access bearer is added to a third registration response, and sent to the first access node, and is finally sent to the wireless terminal.

In this embodiment of the present invention, a wireless terminal sends a first registration request to a first access node. The first access node forwards the first registration request to a core network device. The core network device determines, for the wireless terminal, a second access node whose device capability can support a device type and/or a service type of the wireless terminal as a target access node. The wireless terminal re-accesses a wireless communications network according to an indication of the core network device by using the second access node. Terminals of different device types or service types access access nodes meeting their service requirements, so that better communication quality is provided for wireless terminals.

### Embodiment 4

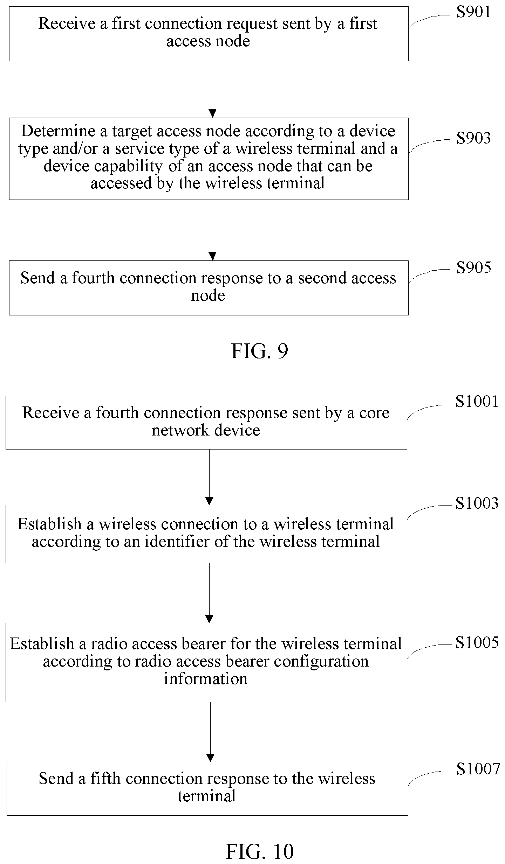

FIG. 9 is a schematic flowchart of another wireless communications access method according to Embodiment 4 of the present invention. As shown in FIG. 9, the wireless communications access method in this embodiment is performed by a core network device. The method includes the following steps.

S901: Receive a first connection request sent by a first access node.

The first connection request carries a device type and/or a service type of a wireless terminal. S903: Determine a target access node according to a device type and/or a service type of the wireless terminal and a device capability of an access node that can be accessed by the wireless terminal.

The core network device determines, according to the device type and/or the service type of the wireless terminal and the device capability of the access node that can be accessed by the wireless terminal, a second access node whose device capability can support the device type and/or the service type of the wireless terminal as the target access node. For a process of performing step 901 and step 903, refer to a corresponding method step in the foregoing embodiment. Specific implementation processes are basically the same. Details are not described herein again. Optionally, when the first connection request is a registration request, the core network device establishes, according to the device type and/or the service type in the registration request, a core network side bearer that meets quality of service that is required by the device type and/or the service type of the wireless terminal, and stores a terminal context.

When the first connection request is a location update request, a terminal context update request, or a service request, the core network device completes location updating, terminal context updating, or a service request of the wireless terminal according to a second connection request. Because the core network device has established a bearer for the wireless terminal, no bearer needs to be reestablished.

S905: Send a fourth connection response to the second access node.

Specifically, after determining the second access node whose device capability can support the device type and/or the service type of the wireless terminal as the target access node, the core network device requests the second access node to establish a radio access bearer for the wireless terminal.

The fourth connection response carries configuration information for requesting to establish a radio access bearer for the wireless terminal and an identifier of the wireless terminal.

The core network device sends the fourth connection response to the second access node. The second access node establishes a radio access bearer for the wireless terminal directly according to the configuration information for establishing a radio access bearer for the wireless terminal and the identifier of the wireless terminal that are carried in the fourth connection response.

Optionally, the fourth connection response further carries terminal context information. The terminal context information includes an identifier of the wireless terminal, the device type and/or the service type of the wireless terminal, a security parameter of the wireless terminal, or the like.

Optionally, the fourth connection response further carries a registration indication for instructing the second access node to accept registration by the wireless terminal. The registration indication is used to indicate, to the second access node, that the response message belongs to a registration transaction.

FIG. 10 is a schematic flowchart of another wireless communications access method according to Embodiment 4 of the present invention. As shown in FIG. 10, the wireless communications access method in this embodiment is performed by an access node. The method includes the following steps.

S1001: Receive a fourth connection response sent by a core network device.

The fourth connection response carries configuration information for establishing a radio access bearer for a wireless terminal and an identifier of the wireless terminal.

Optionally, the fourth connection response further carries terminal context information. The terminal context information includes the identifier of the wireless terminal, a device type and/or a service type of the wireless terminal, a security parameter of the wireless terminal, or the like. Optionally, the fourth connection response further carries terminal redirection indication. The terminal redirection indication is used to indicate, to the access node, that the wireless terminal is redirected to the access node.

S1003: Establish a wireless connection to the wireless terminal according to an identifier of the wireless terminal.

S1005: Establish a radio access bearer for the wireless terminal according to radio access bearer configuration information.

S1007: Send a fifth connection response to the wireless terminal.

The fifth connection response carries radio resource configuration information of the radio access bearer, so that the wireless terminal establishes a radio bearer between the wireless terminal and the access node according to the radio resource configuration information of the radio access bearer.

Specifically, the access node receives the fourth connection response sent by the core network device, and proactively pages the wireless terminal according to the identifier of the wireless terminal that is carried in the fourth connection response. After detecting a paging request of the access node, the wireless terminal sends a paging response to the access node. In this way, the access node establishes a wireless connection to the wireless terminal.

Then, according to the configuration information, delivered by the core network device, for establishing a radio access bearer for the wireless terminal, the access node establishes a radio access bearer for the wireless terminal, and allocates a radio resource. The fifth connection response is sent to the wireless terminal by using the established wireless connection.

If the access node has established a wireless connection to the wireless terminal, the access node sends the fifth connection response to the wireless terminal by using the established wireless connection.

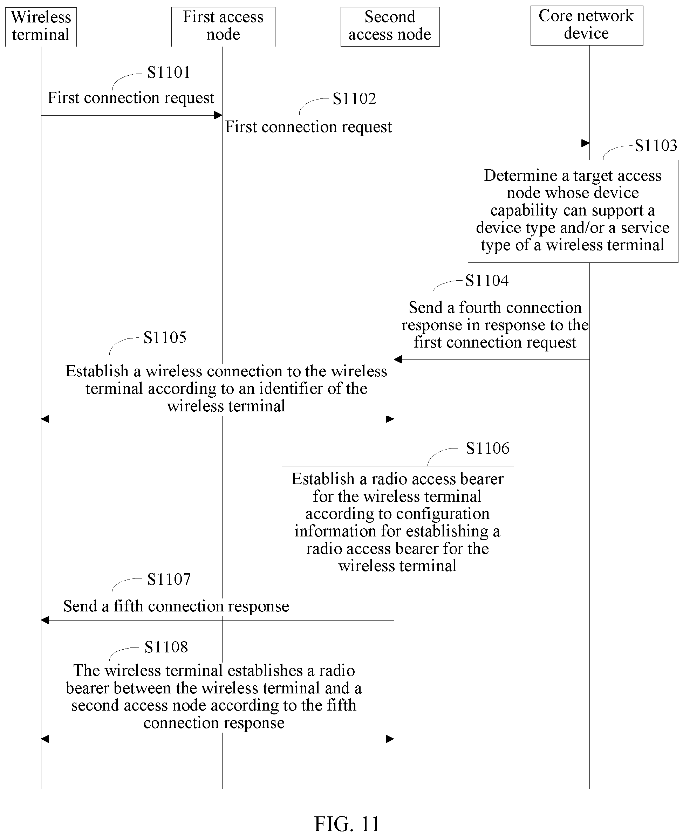

Optionally, if the fourth connection response further carries terminal redirection indication, the fifth connection response further carries redirection information for instructing the wireless terminal to connect to the access node, so that the wireless terminal determines, according to the redirection information, that the access node is an access node, whose device capability can support the device type and/or the service type of the wireless terminal, that is determined by the core network device. FIG. 11 is a schematic diagram of information exchange between devices in another wireless communications access method according to Embodiment 4 of the present invention. As shown in FIG. 11, information exchange devices in this embodiment include a wireless terminal, a first access node, a second access node, and a core network device. Application scenarios in this embodiment include a registration scenario, a location update scenario, a UE context update scenario, a service scenario, and the like. The method includes the following steps.

S1101: A wireless terminal sends a first connection request to a first access node.

The first connection request is a connection request initiated by the wireless terminal to a core network device, and carries at least one of a device type or a service type of the wireless terminal.

S1102: The first access node sends the first connection request to a core network device.

S1103: The core network device determines, according to a device type and/or a service type of the wireless terminal and a device capability of an access node that can be accessed by the wireless terminal, a target access node whose device capability can support the device type and/or the service type of the wireless terminal.

The target access node is a second access node. For a process of performing step S1103, refer to a corresponding method step in the foregoing embodiment. Specific implementation processes are basically the same. Details are not described herein again.

S1104: The core network device sends a fourth connection response in response to the first connection request to the second access node.

The fourth connection response carries configuration information for establishing a radio access bearer for the wireless terminal and an identifier of the wireless terminal.

S1105: The second access node establishes a wireless connection to the wireless terminal according to the identifier of the wireless terminal.

S1106: The second access node establishes a radio access bearer for the wireless terminal according to configuration information for establishing a radio access bearer for the wireless terminal, and allocates a radio resource.

S1107: The second access node sends a fifth connection response to the wireless terminal.

The fifth connection response carries radio resource configuration information of the radio access bearer.

S1108: The wireless terminal establishes a radio bearer between the wireless terminal and the second access node according to the fifth connection response.

Specifically, a wireless terminal sends a first connection request to a first access node. The first access node forwards the first connection request to a core network device. After determining that a target access node is a second access node whose device capability can support a device type and/or a service type of the wireless terminal, the core network device establishes a core network side bearer for the wireless terminal. The core network device sends a fourth connection response in response to the first connection request to the second access node. After receiving the fourth connection response, according to configuration information for establishing a radio access bearer for the wireless terminal and an identifier of the wireless terminal that are carried in the fourth connection response, the second access node establishes a wireless connection to the wireless terminal, establishes a radio access bearer for the wireless terminal, and allocates a radio resource, and sends a fifth connection response to the wireless terminal by using the established wireless connection.

If the second access node has established a wireless connection to the wireless terminal, the second access node sends the fifth connection response to the wireless terminal directly by using the established wireless connection.

After receiving radio resource configuration information of the radio access bearer established for the wireless terminal by the second access node, the wireless terminal establishes a radio bearer between the wireless terminal and the second access node according to the information.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

### Embodiment 5

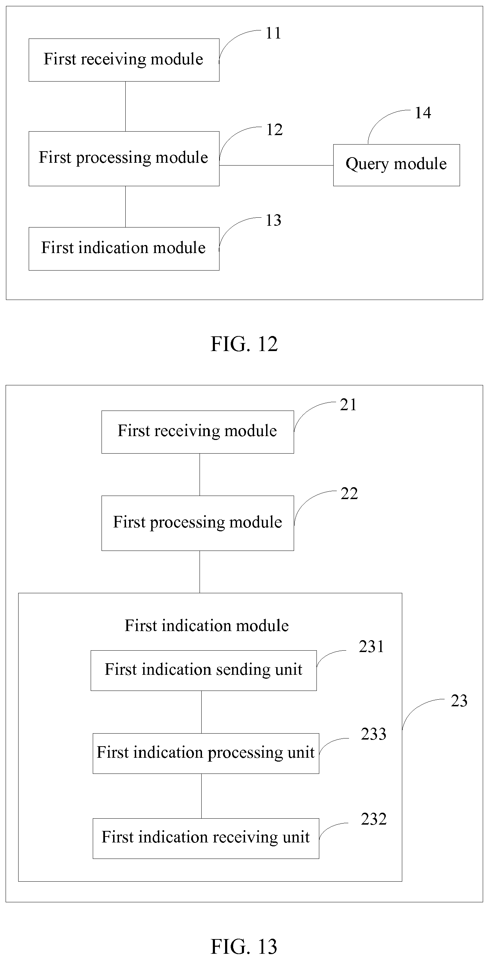

FIG. 12 is a schematic structural diagram of a communications apparatus according to Embodiment 5 of the present invention. As shown in FIG. 12, the communications apparatus includes a first receiving module 11, a first processing module 12, and a first indication module 13. The first receiving module 11 is in communication connection with the first processing module 12, and sends a first connection request to the first processing module 12. The first processing module 12 is in communication connection with the first indication module 13, and notifies the first indication module 13 of a determining result. The communications apparatus may be disposed in a core network device in networking.

The first receiving module 11 is configured to receive a first connection request sent by a first access node. The first connection request carries a device type and/or a service type of a wireless terminal.

The first processing module 12 is configured to determine, according to the device type and/or the service type of the wireless terminal and a device capability of an access node that can be accessed by the wireless terminal, an access node whose device capability can support the device type and/or the service type of the wireless terminal as a target access node.

The first indication module 13 is configured to instruct the wireless terminal to access a network by using the target access node.

Optionally, the first connection request further carries a device capability of the first access node. Optionally, the first processing module includes a first judging unit and a first determining unit. The first judging unit is in communication connection with the first determining unit. Specifically:
The first judging unit is configured to determine, according to the device type and/or the service type of the wireless terminal and the device capability of the first access node, whether the device capability of the first access node supports the device type and/or the service type of the wireless terminal.

The first determining unit is configured to use the first access node as the target access node if the device capability of the first access node supports the device type and/or the service type of the wireless terminal.

Optionally, the first processing module includes a first judging unit, a second judging unit, and a second determining unit. The second judging unit is separately in communication connection with the first judging unit and the second determining unit. Specifically:
The first judging unit is configured to determine, according to the device type and/or the service type of the wireless terminal and the device capability of the first access node, whether the device capability of the first access node supports the device type and/or the service type of the wireless terminal.

The second judging unit is configured to: if the device capability of the first access node does not support the device type and/or the service type of the wireless terminal, determine, according to the device type and/or the service type of the wireless terminal and a device capability of the second access node, whether the device capability of the second access node supports the device type and/or the service type of the wireless terminal. The second access node is an access node that can be accessed by the wireless terminal other than the first access node.

The second determining unit is configured to use the second access node as the target access node if the device capability of the second access node supports the device type and/or the service type of the wireless terminal.

Optionally, the first connection request further carries location information of the wireless terminal. The apparatus further includes a query module 14. The query module 14 is in communication connection with the first processing module 12. Specifically:
The query module 14 is configured to: determine , by the core network device, according to the location information of the wireless terminal, the access node that can be accessed by the wireless terminal, and obtain , by the core network device, the device capability of the access node that can be accessed by the wireless terminal.

Optionally, the first processing module 12 is further configured to: if there is no access node whose device capability supports the device type and/or the service type of the wireless terminal, match, by the core network device, quality of service that is required by the device type and/or the service type of the wireless terminal with quality of service that is provided by the access node that can be accessed by the wireless terminal, and determine an access node having a highest quality of service matching degree as a secondary target access node. The first indication module 13 is further configured to instruct the wireless terminal to access the network by using the secondary target access node.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

FIG. 13 is a schematic structural diagram of another communications apparatus according to Embodiment 5 of the present invention. As shown in FIG. 13, the communications apparatus includes a first receiving module 21, a first processing module 22, and a first indication module 23. The first receiving module 21 is in communication connection with the first processing module 22, and sends a first connection request to the first processing module 22. The first processing module 22 is in communication connection with the first indication module 23, and notifies the first indication module 23 of a determining result. The communications apparatus may be disposed in a core network device in networking.

The first receiving module 21 is configured to receive a first connection request sent by a first access node. The first connection request carries a device type and/or a service type of a wireless terminal.

The first processing module 22 is configured to determine, according to the device type and/or the service type of the wireless terminal and a device capability of an access node that can be accessed by the wireless terminal, an access node whose device capability can support the device type and/or the service type of the wireless terminal as a target access node.

The first indication module 23 is configured to instruct the wireless terminal to access a network by using the target access node.

The first indication module 23 includes a first indication sending unit 231, a first indication receiving unit 232, and a first indication processing unit 233. The first indication processing unit 233 is separately in communication connection with the first indication sending unit 231 and the first indication receiving unit 232. Specifically:
The first indication sending unit 231 is configured to: if the target access node is the second access node that can be accessed by the wireless terminal other than the first access node, send a first connection response in response to the first connection request to the first access node. The first connection response carries redirection information for instructing the wireless terminal to connect to the second access node.

The first indication receiving unit 232 is configured to receive a second connection request sent by the second access node. The second connection request is a connection request that is sent when the wireless terminal connects to the second access node according to the redirection information.

The first indication processing unit 233 is configured to instruct, according to the second connection request, the first indication sending unit 231 to send, to the second access node, a second connection response used to indicate that the core network device accepts the second connection request.

Optionally, the second connection request carries indication information indicating that the second connection request and the first connection request belong to a same connection transaction.

Optionally, the device capability further includes a session management capability supported by the access node.

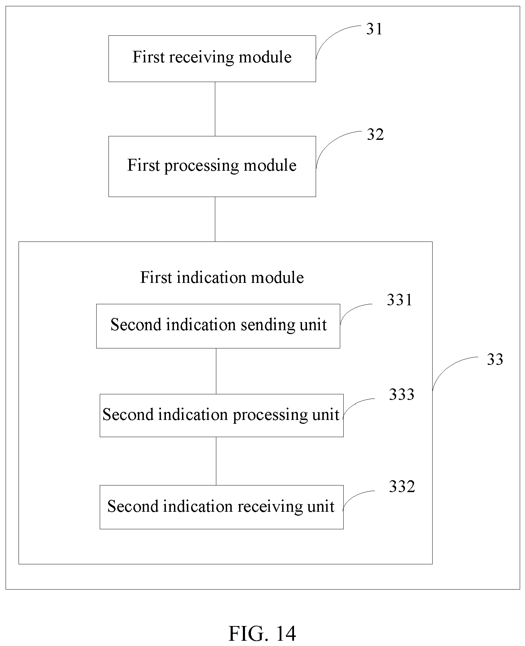

FIG. 14 is a schematic structural diagram of another communications apparatus according to Embodiment 5 of the present invention. As shown in FIG. 14, the communications apparatus includes a first receiving module 31, a first processing module 32, and a first indication module 33. The first receiving module 31 is in communication connection with the first processing module 32, and sends a first connection request to the first processing module 32. The first processing module 32 is in communication connection with the first indication module 33, and notifies the first indication module 33 of a determining result. The communications apparatus may be disposed in a core network device in networking.

The first receiving module 31 is configured to receive a first connection request sent by a first access node. The first connection request carries a device type and/or a service type of a wireless terminal.

The first processing module 32 is configured to determine, according to the device type and/or the service type of the wireless terminal and a device capability of an access node that can be accessed by the wireless terminal, an access node whose device capability can support the device type and/or the service type of the wireless terminal as a target access node.

The first indication module 33 is configured to instruct the wireless terminal to access a network by using the target access node.

The first indication module 33 includes a second indication sending unit 331, a second indication receiving unit 332, and a second indication processing unit 333. The second indication processing unit 333 is separately in communication connection with the second indication sending unit 331 and the second indication receiving unit 332. Specifically:
The second indication sending unit 331 is configured to: if the target access node is the second access node that can be accessed by the wireless terminal other than the first access node, send a handover request to the second access node. The handover request carries configuration information for establishing a radio access bearer for the wireless terminal, so that the second access node establishes a radio access bearer for the wireless terminal according to the radio access bearer configuration information.

The second indication receiving unit 332 is configured to receive a handover response sent by the second access node. The handover response carries radio resource configuration information of the radio access bearer, so that the wireless terminal establishes a radio bearer between the wireless terminal and the second access node according to the radio resource configuration information.

The second indication processing unit 333 is configured to instruct, according to the handover response, the second indication sending unit 331 to send a third connection response in response to the first connection request to the first access node. The third connection response carries the radio resource configuration information of the radio access bearer established for the wireless terminal by the second access node and a handover indication for instructing the wireless terminal to switch to the second access node.

Optionally, the device capability further includes a session management capability supported by the access node.

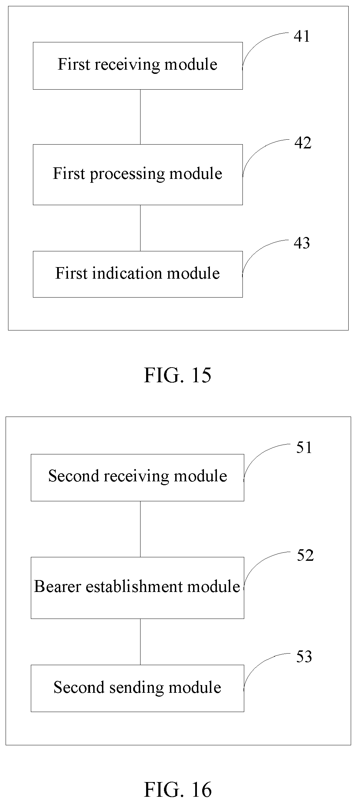

FIG. 15 is a schematic structural diagram of another communications apparatus according to Embodiment 5 of the present invention. As shown in FIG. 15, the communications apparatus includes a first receiving module 41, a first processing module 42, and a first indication module 43.

The first receiving module 41 is in communication connection with the first processing module 42, and sends a first connection request to the first processing module 42. The first processing module 42 is in communication connection with the first indication module 43, and notifies the first indication module 43 of a determining result. The communications apparatus may be disposed in a core network device in networking. Specifically:
The first receiving module 41 is configured to receive a first connection request sent by a first access node. The first connection request carries a device type and/or a service type of a wireless terminal.

The first processing module 42 is configured to determine, according to the device type and/or the service type of the wireless terminal and a device capability of an access node that can be accessed by the wireless terminal, an access node whose device capability can support the device type and/or the service type of the wireless terminal as a target access node.

The first indication module 43 is configured to: if the target access node is a second access node that can be accessed by the wireless terminal other than the first access node, send a fourth connection response in response to the first connection request to the second access node. The fourth connection response carries configuration information for establishing a radio access bearer for the wireless terminal and an identifier of the wireless terminal.

Optionally, the device capability further includes a session management capability supported by the access node.

In this embodiment of the present invention, a core network device determines, according to a device type and/or a service type of a wireless terminal and a device capability of an access node that can be accessed by the wireless terminal, an access node whose device capability can support the device type and/or the service type of the wireless terminal as a target access node, and instructs the wireless terminal to access a network by using the target access node. Terminals of different device types or service types access access nodes meeting their service requirements, so that better communication quality is provided for wireless terminals.

FIG. 16 is a schematic structural diagram of another communications apparatus according to Embodiment 5 of the present invention. As shown in FIG. 16, the communications apparatus includes a second receiving module 51, a bearer establishment module 52, and a second sending module 53. The second receiving module 51 is in communication connection with the bearer establishment module 52, and sends a fourth connection response to the bearer establishment module 52. The bearer establishment module 52 is in communication connection with the second sending module 53. The communications apparatus may be disposed in an access node device in networking. Specifically:
The second receiving module 51 is configured to receive a fourth connection response sent by a core network device. The fourth connection response carries configuration information for establishing a radio access bearer for a wireless terminal and an identifier of the wireless terminal. The bearer establishment module 52 is configured to: establish a wireless connection to the wireless terminal according to the identifier of the wireless terminal, and establish a radio access bearer for the wireless terminal according to the radio access bearer configuration information.

The second sending module 53 is configured to send a fifth connection response to the wireless terminal. The fifth connection response carries radio resource configuration information of the radio access bearer, so that the wireless terminal establishes, between the wireless terminal and the access node according to the radio resource configuration information of the radio access bearer, a radio bearer used for data transmission.

Optionally, the fourth connection response further carries a first indication indicating that the wireless terminal is redirected to the access node.

In this embodiment of the present invention, a wireless terminal accesses a network by using an access node determined by the core network device as a target access node whose device capability can support a device type and/or a service type of a wireless terminal. In this way, wireless terminals of different device types or service types access access nodes meeting their service requirements, so that better communication quality is provided for the wireless terminals.

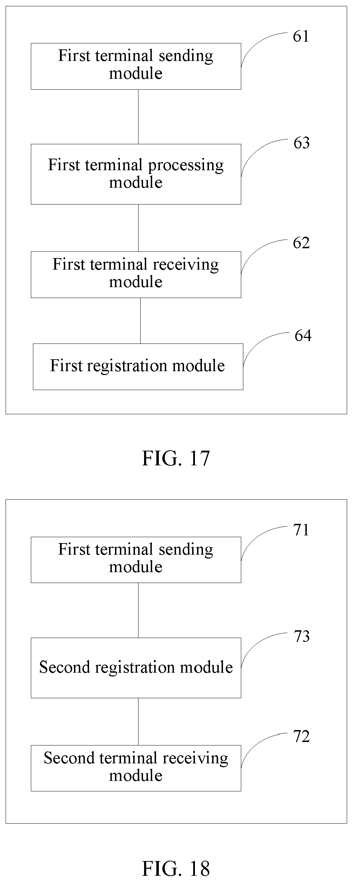

FIG. 17 is a schematic structural diagram of a wireless terminal according to Embodiment 5 of the present invention. As shown in FIG. 17, the wireless terminal includes a first terminal sending module 61, a first terminal receiving module 62, a first terminal processing module 63, and a first registration module 64. The first terminal processing module 63 is separately in communication connection with the first terminal sending module 61 and the first terminal receiving module 62.

The first registration module 64 is in communication connection with the first terminal receiving module 62. The foregoing modules may be integrated into a modem chip of the wireless terminal.

Specifically:
The first terminal sending module 61 is configured to send a first registration request to a first access node. The first registration request carries a device type and/or a service type of the wireless terminal.

The first terminal receiving module 62 is configured to receive a first registration response that is sent by the first access node and that is in response to the first registration request. The first registration response carries registration redirection information for instructing the wireless terminal to connect to a second access node whose device capability can support the device type and/or the service type of the wireless terminal, for registration.

The first terminal processing module 63 is configured to instruct, according to the registration redirection information, the first terminal sending module to send a second registration request to the second access node.

The first terminal receiving module 62 is further configured to receive a second registration response that is sent by the second access node and that is in response to the second registration request.

The first registration module 64 is configured to complete a registration process according to the second registration response.

Optionally, the second registration request carries a transaction identifier indicating that the second registration request and the first registration request belong to a same registration transaction.

Optionally, the first registration module 64 is further configured to: establish, between the wireless terminal and the second access node according to the second registration response, a radio bearer used for data transmission, and complete a registration process.

FIG. 18 is a schematic structural diagram of another wireless terminal according to Embodiment 5 of the present invention. As shown in FIG. 18, the wireless terminal includes a first terminal sending module 71, a second terminal receiving module 72, and a second registration module 73.

The second registration module 73 is separately in communication connection with the first terminal sending module 71 and the second terminal receiving module 72. Specifically:
The first terminal sending module 71 is configured to send a first registration request to a first access node. The first registration request carries a device type and/or a service type of the wireless terminal.

The second terminal receiving module 72 is configured to receive a third registration response that is sent by the first access node and that is in response to the first registration request. The third registration response carries a registration handover indication for instructing the wireless terminal to switch to a second access node whose device capability can support the device type and/or the service type of the wireless terminal, and radio resource configuration information of a radio access bearer established for the wireless terminal by the second access node.

The second registration module 73 is configured to: establish, between the wireless terminal and the second access node according to the handover indication and the radio resource configuration information of the radio access bearer, a radio bearer used for data transmission, and complete a registration process.

Optionally, the first terminal sending module 71 is further configured to send a registration information deletion request to the first access node. The registration information deletion request is used to request the first access node to delete registration information of the wireless terminal.

In this embodiment of the present invention, a core network device determines an access node whose device capability can support a device type and/or a service type of the wireless terminal as a target access node, and the wireless terminal accesses a network by connecting to the target access node. In this way, terminals of different device types or service types access access nodes meeting their service requirements, so that better communication quality is provided for wireless terminals.

Embodiment 5 of the present invention further includes a wireless communications access system. The system includes the communications apparatus according to FIG. 12 to FIG. 15 in Embodiment 5 of the present invention and the communications apparatus according to FIG. 16 in Embodiment 5 of the present invention.

Embodiment 5 of the present invention further includes a communications apparatus. The communications apparatus may be disposed in a core network device in networking. The communications apparatus includes:
one or more processors;
a memory; and
one or more programs, where the one or more programs are stored in the memory and are configured to be executed by the one or more processors, and the one or more programs include an instruction used to perform the method shown in FIG. 1, FIG. 2, FIG. 3, FIG. 6, or FIG. 9. Embodiment 5 of the present invention further includes a communications apparatus. The communications apparatus may be disposed in an access node in networking. The communications apparatus includes:
one or more processors;
a memory; and
one or more programs, where the one or more programs are stored in the memory and are configured to be executed by the one or more processors, and the one or more programs include an instruction used to perform the method shown in FIG. 10.

Embodiment 5 of the present invention further includes a wireless terminal, including:
one or more processors;
a memory; and
one or more programs, where the one or more programs are stored in the memory and are configured to be executed by the one or more processors, and the one or more programs include an instruction used to perform the method shown in FIG. 4 or FIG. 7.

It should be noted that content such as information exchange and an execution process between the units in the device and the system is based on a same idea as the method embodiments of the present invention. Therefore, for detailed content, refer to descriptions in the method embodiments of the present invention, and details are not described herein again.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

## Claims

1. A wireless communications access method for use in a communication network, the communication network comprising multiple access nodes that can be accessed by a wireless terminal, wherein, the multiple access nodes comprise a first access node and one or more second access nodes, wherein the method comprises:
receiving (S101), by a core network device, a first registration request sent by the first access node, wherein the first registration request carries a device type and/or a service type of the wireless terminal;
determining (S103), by the core network device according to the device type and/or the service type of the wireless terminal and a device capability of the access nodes that can be accessed by the wireless terminal, one of the access nodes whose device capability can support the device type and/or the service type of the wireless terminal as a target access node; and
instructing (S105), by the core network device, the wireless terminal to access a network by using the target access node, wherein after the determining, by the core network device according to the device type and/or the service type of the wireless terminal and a device capability of an access node that can be accessed by the wireless terminal, an access node whose device capability can support the device type and/or the service type of the wireless terminal as a target access node, the method further comprises:
if there is no access node whose device capability supports the device type and/or the service type of the wireless terminal, matching, by the core network device, quality of service that is required by the device type and/or the service type of the wireless terminal with quality of service that is provided by the access node that can be accessed by the wireless terminal;
determining , by the core network device, an access node having a highest quality of service matching degree as a secondary target access node; and
instructing, by the core network device, the wireless terminal to access the network by using the secondary target access node.

2. The method according to claim 1, wherein the first registration request further carries a device capability of the first access node.

3. The method according to claim 1 or 2, wherein the determining, by the core network device according to the device type and/or the service type of the wireless terminal and a device capability of an access node that can be accessed by the wireless terminal, an access node whose device capability can support the device type and/or the service type of the wireless terminal as a target access node comprises:
determining, by the core network device according to the device type and/or the service type of the wireless terminal and the device capability of the first access node, whether the device capability of the first access node supports the device type and/or the service type of the wireless terminal; and
using, by the core network device, the first access node as the target access node if the device capability of the first access node supports the device type and/or the service type of the wireless terminal.

4. The method according to claim 1 or 2, wherein the determining, by the core network device according to the device type and/or the service type of the wireless terminal and a device capability of an access node that can be accessed by the wireless terminal, an access node whose device capability can support the device type and/or the service type of the wireless terminal as a target access node comprises:
determining, by the core network device according to the device type and/or the service type of the wireless terminal and the device capability of the first access node, whether the device capability of the first access node supports the device type and/or the service type of the wireless terminal; and
if the device capability of the first access node does not support the device type and/or the service type of the wireless terminal, determining, by the core network device according to the device type and/or the service type of the wireless terminal and a device capability of a second access node, whether the device capability of the second access node supports the device type and/or the service type of the wireless terminal, wherein the second access node is an access node that can be accessed by the wireless terminal other than the first access node; and
using, by the core network device, the second access node as the target access node if the device capability of the second access node supports the device type and/or the service type of the wireless terminal.

5. The method according to any one of claims 1, 2, or 4, wherein if the target access node is the second access node that can be accessed by the wireless terminal other than the first access node,
the instructing, by the core network device, the wireless terminal to access a network by using the target access node comprises:
sending, by the core network device, a first registration response in response to the first registration request to the first access node, wherein the first registration response carries redirection information for instructing the wireless terminal to connect to the second access node;
receiving, by the core network device, a second registration request sent by the second access node, wherein the second registration request is a connection request that is sent when the wireless terminal connects to the second access node according to the redirection information; and
sending, by the core network device, a second registration response in response to the second registration request to the second access node according to the second registration request.

6. A communications apparatus for use in a communication network, the communication network comprising multiple access nodes that can be accessed by a wireless terminal, wherein, the multiple access nodes comprise a first access node and one or more second access nodes, wherein the apparatus comprises:
a first receiving module (11), configured to receive a first registration request sent by the first access node, wherein the first registration request carries a device type and/or a service type of the wireless terminal;
a first processing module (12), configured to determine, according to the device type and/or the service type of the wireless terminal and a device capability of the access nodes that can be accessed by the wireless terminal, one of the access nodes whose device capability can support the device type and/or the service type of the wireless terminal as a target access node; and
a first indication module (13), configured to instruct the wireless terminal to access a network by using the target access node, wherein the first processing module is further configured to:
if there is no access node whose device capability supports the device type and/or the service type of the wireless terminal, match quality of service that is required by the device type and/or the service type of the wireless terminal with quality of service that is provided by the access node that can be accessed by the wireless terminal, and determine an access node having a highest quality of service matching degree as a secondary target access node; and
the first indication module is further configured to instruct the wireless terminal to access the network by using the secondary target access node.

7. The apparatus according to claim 6, wherein the first registration request further carries a device capability of the first access node.

8. The apparatus according to claim 6 or 7, wherein the first processing module comprises:
a first judging unit, configured to determine, according to the device type and/or the service type of the wireless terminal and the device capability of the first access node, whether the device capability of the first access node supports the device type and/or the service type of the wireless terminal; and
a first determining unit, configured to use the first access node as the target access node if the device capability of the first access node supports the device type and/or the service type of the wireless terminal.

9. The apparatus according to claim 6 or 7 , wherein the first processing module comprises:
a first judging unit, configured to determine, according to the device type and/or the service type of the wireless terminal and the device capability of the first access node, whether the device capability of the first access node supports the device type and/or the service type of the wireless terminal;
a second judging unit, configured to: if the device capability of the first access node does not support the device type and/or the service type of the wireless terminal, determine, according to the device type and/or the service type of the wireless terminal and a device capability of a second access node, whether the device capability of the second access node supports the device type and/or the service type of the wireless terminal, wherein the second access node is an access node that can be accessed by the wireless terminal other than the first access node; and
a second determining unit, configured to use the second access node as the target access node if the device capability of the second access node supports the device type and/or the service type of the wireless terminal.

10. The apparatus according to any one of claims 6, 7 or 9 , wherein the first indication module comprises:
a first indication sending unit, configured to: if the target access node is the second access node that can be accessed by the wireless terminal other than the first access node, send a first registration response in response to the first registration request to the first access node, wherein the first registration response carries redirection information for instructing the wireless terminal to connect to the second access node;
a first indication receiving unit, configured to receive a second registration request sent by the second access node, wherein the second registration request is a connection request that is sent when the wireless terminal connects to the second access node according to the redirection information; and
a first indication processing unit, configured to instruct, according to the second registration request, the first indication sending unit to send, to the second access node, a second registration response used to indicate that the core network device accepts the second registration request.

## Patentansprüche

1. Drahtloskommunikations-Zugriffsverfahren zur Verwendung in einem Kommunikationsnetzwerk, wobei das Kommunikationsnetzwerk mehrere Zugriffsknoten umfasst, auf die von einem Drahtlosendgerät zugegriffen werden kann, wobei die mehreren Zugriffsknoten einen ersten Zugriffsknoten und einen oder mehrere zweite Zugriffsknoten umfassen, wobei das Verfahren Folgendes umfasst:
Empfangen (S101), durch ein Kernnetzwerkgerät, einer ersten Registrierungsanforderung, die von dem ersten Zugriffsknoten gesendet wird, wobei die erste Registrierungsanforderung einen Gerätetyp und/oder einen Diensttyp des Drahtlosendgeräts trägt;
Bestimmen (S103), durch das Kernnetzwerkgerät, gemäß dem Gerätetyp und/oder dem Diensttyp des Drahtlosendgeräts und einer Geräteleistungsfähigkeit der Zugriffsknoten, auf die das Drahtlosendgerät zugreifen kann, eines der Zugriffsknoten, dessen Geräteleistungsfähigkeit den Gerätetyp und/oder den Diensttyp des Drahtlosendgeräts als Zielzugriffsknoten unterstützen kann; und
Anweisen (S105), durch das Kernnetzwerkgerät, des Drahtlosendgeräts, unter Verwendung des Zielzugriffsknotens auf ein Netzwerk zuzugreifen, wobei nach dem Bestimmen, durch das Kernnetzwerkgerät gemäß dem Gerätetyp und/oder dem Diensttyp des Drahtlosendgeräts und einer Geräteleistungsfähigkeit eines Zugriffsknotens, auf den das Drahtlosendgerät zugreifen kann, eines Zugriffsknotens, dessen Geräteleistungsfähigkeit den Gerätetyp und/oder den Diensttyp des Drahtlosendgeräts als Zielzugriffsknoten unterstützen kann, das Verfahren ferner Folgendes umfasst:
wenn kein Zugriffsknoten vorliegt, dessen Geräteleistungsfähigkeit den Gerätetyp und/oder den Diensttyp des Drahtlosendgeräts unterstützt, Abgleichen, durch das Kernnetzwerkgerät, einer Dienstqualität, die für den Gerätetyp und/oder den Diensttyp des Drahtlosendgeräts angefordert wird, mit einer Dienstqualität, die von dem Zugriffsknoten bereitgestellt wird, auf den das Drahtlosendgerät zugreifen kann;
Bestimmen, durch das Kernnetzwerkgerät, eines Zugriffsknotens mit dem höchsten Dienstqualität-Entsprechungsgrad als ein sekundärer Zielzugriffsknoten; und
Anweisen, durch das Kernnetzwerkgerät, des Drahtlosendgeräts, über den sekundären Zielzugriffsknoten auf das Netzwerk zuzugreifen.

2. Verfahren nach Anspruch 1, wobei die erste Registrierungsanforderung ferner eine Geräteleistungsfähigkeit des ersten Zugriffsknotens trägt.

3. Verfahren nach Anspruch 1 oder 2, wobei das Bestimmen, durch das Kernnetzwerkgerät, gemäß dem Gerätetyp und/oder dem Diensttyp des Drahtlosendgeräts und einer Geräteleistungsfähigkeit eines Zugriffsknotens, auf den das Drahtlosendgerät zugreifen kann, eines Zugriffsknotens, dessen Geräteleistungsfähigkeit den Gerätetyp und/oder den Diensttyp des Drahtlosendgeräts als Zielzugriffsknoten unterstützen kann, Folgendes umfasst:
Bestimmen, durch das Kernnetzwerkgerät, gemäß dem Gerätetyp und/oder dem Diensttyp des Drahtlosendgeräts und der Geräteleistungsfähigkeit des ersten Zugriffsknotens, ob die Geräteleistungsfähigkeit des ersten Zugriffsknotens den Gerätetyp und/oder den Diensttyp des Drahtlosendgeräts unterstützt; und
Verwenden, durch das Kernnetzwerkgerät, des ersten Zugriffsknotens als Zielzugriffsknoten, wenn die Geräteleistungsfähigkeit des ersten Zugriffsknotens den Gerätetyp und/oder den Diensttyp des Drahtlosendgeräts unterstützt.

4. Verfahren nach Anspruch 1 oder 2, wobei das Bestimmen, durch das Kernnetzwerkgerät, gemäß dem Gerätetyp und/oder dem Diensttyp des Drahtlosendgeräts und einer Geräteleistungsfähigkeit eines Zugriffsknotens, auf den das Drahtlosendgerät zugreifen kann, eines Zugriffsknotens, dessen Geräteleistungsfähigkeit den Gerätetyp und/oder den Diensttyp des Drahtlosendgeräts als Zielzugriffsknoten unterstützen kann, Folgendes umfasst:
Bestimmen, durch das Kernnetzwerkgerät, gemäß dem Gerätetyp und/oder dem Diensttyp des Drahtlosendgeräts und der Geräteleistungsfähigkeit des ersten Zugriffsknotens, ob die Geräteleistungsfähigkeit des ersten Zugriffsknotens den Gerätetyp und/oder den Diensttyp des Drahtlosendgeräts unterstützt; und
wenn die Geräteleistungsfähigkeit des ersten Zugriffsknotens den Gerätetyp und/oder den Diensttyp des Drahtlosendgeräts nicht unterstützt, Bestimmen, durch das Kernnetzwerkgerät, gemäß dem Gerätetyp und/oder dem Diensttyp des Drahtlosendgeräts und einer Geräteleistungsfähigkeit eines zweiten Zugriffsknotens, ob die Geräteleistungsfähigkeit des zweiten Zugriffsknotens den Gerätetyp und/oder den Diensttyp des Drahtlosendgeräts unterstützt, wobei der zweite Zugriffsknoten ein anderer Zugriffsknoten als der erste Zugriffsknoten ist, auf den das Drahtlosendgerät zugreifen kann; und
Verwenden, durch das Kernnetzwerkgerät, des zweiten Zugriffsknotens als Zielzugriffsknoten, wenn die Geräteleistungsfähigkeit des zweiten Zugriffsknotens den Gerätetyp und/oder den Diensttyp des Drahtlosendgeräts unterstützt.

5. Verfahren nach einem der Ansprüche 1, 2 oder 4, wobei, wenn der Zielzugriffsknoten der zweite von dem ersten Zugriffsknoten verschiedene Zugriffsknoten ist, auf den das Drahtlosendgerät zugreifen kann, das Anweisen, durch das Kernnetzwerkgerät, des Drahtlosendgeräts, unter Verwendung des Zielzugriffsknotens auf ein Netzwerk zuzugreifen, Folgendes umfasst:
Senden, durch das Kernnetzwerkgerät, einer ersten Registrierungsantwort an den ersten Zugriffsknoten als Antwort auf die erste Registrierungsanforderung, wobei die erste Registrierungsantwort Umleitungsinformationen enthält, um das Drahtlosendgerät anzuweisen, eine Verbindung mit dem zweiten Zugriffsknoten herzustellen;
Empfangen, durch das Kernnetzwerkgerät, einer zweiten Registrierungsanforderung, die von dem zweiten Zugriffsknoten gesendet wird, wobei die zweite Registrierungsanforderung eine Verbindungsanforderung ist, die gesendet wird, wenn das Drahtlosendgerät gemäß den Umleitungsinformationen eine Verbindung mit dem zweiten Zugriffsknoten herstellt; und
Senden, durch das Kernnetzwerkgerät, einer zweiten Registrierungsantwort als Antwort auf die zweite Registrierungsanforderung an den zweiten Zugriffsknoten gemäß der zweiten Registrierungsanforderung.

6. Kommunikationsvorrichtung zur Verwendung in einem Kommunikationsnetzwerk, wobei das Kommunikationsnetzwerk mehrere Zugriffsknoten umfasst, auf die von einem Drahtlosendgerät zugegriffen werden kann, wobei die mehreren Zugriffsknoten einen ersten Zugriffsknoten und einen oder mehrere zweite Zugriffsknoten umfassen, die Vorrichtung Folgendes umfassend:
ein erstes Empfangsmodul (11), konfiguriert für das Empfangen einer ersten Registrierungsanforderung, die von dem ersten Zugriffsknoten gesendet wird, wobei die erste Registrierungsanforderung einen Gerätetyp und/oder einen Diensttyp des Drahtlosendgeräts trägt;
ein erstes Verarbeitungsmodul (12), konfiguriert für das Bestimmen, gemäß dem Gerätetyp und/oder dem Diensttyp des Drahtlosendgeräts und einer Geräteleistungsfähigkeit der Zugriffsknoten, auf die das Drahtlosendgerät zugreifen kann, eines der Zugriffsknoten, dessen Geräteleistungsfähigkeit den Gerätetyp und/oder den Diensttyp des Drahtlosendgeräts als Zielzugriffsknoten unterstützen kann; und
ein erstes Angabemodul (13), dafür konfiguriert, das Drahtlosendgerät anzuweisen, unter Verwendung des Zielzugriffsknotens auf ein Netzwerk zuzugreifen, wobei das erste Verarbeitungsmodul ferner für Folgendes konfiguriert ist:
wenn kein Zugriffsknoten vorliegt, dessen Geräteleistungsfähigkeit den Gerätetyp und/oder den Diensttyp des Drahtlosendgeräts unterstützt, Abgleichen einer Dienstqualität, die für den Gerätetyp und/oder den Diensttyp des Drahtlosendgeräts angefordert wird, mit einer Dienstqualität, die von dem Zugriffsknoten bereitgestellt wird, auf den das Drahtlosendgerät zugreifen kann, und Bestimmen eines Zugriffsknotens mit einem höchsten Dienstqualität-Entsprechungsgrad als sekundären Zielzugriffsknoten; und
das erste Angabemodul ferner dafür konfiguriert ist, das Drahtlosendgerät anzuweisen, unter Verwendung des sekundären Zielzugriffsknotens auf das Netzwerk zuzugreifen.

7. Vorrichtung nach Anspruch 6, wobei die erste Registrierungsanforderung ferner eine Geräteleistungsfähigkeit des ersten Zugriffsknotens trägt.

8. Vorrichtung nach Anspruch 6 oder 7, wobei das erste Verarbeitungsmodul Folgendes umfasst:
eine erste Beurteilungseinheit, konfiguriert für das Bestimmen, gemäß dem Gerätetyp und/oder dem Diensttyp des Drahtlosendgeräts und der Geräteleistungsfähigkeit des ersten Zugriffsknotens, ob die Geräteleistungsfähigkeit des ersten Zugriffsknotens den Gerätetyp und/oder den Diensttyp des Drahtlosendgeräts unterstützt; und
eine erste Bestimmungseinheit, konfiguriert für das Verwenden des ersten Zugriffsknotens als Zielzugriffsknoten, wenn die Geräteleistungsfähigkeit des ersten Zugriffsknotens den Gerätetyp und/oder den Diensttyp des Drahtlosendgeräts unterstützt.

9. Vorrichtung nach Anspruch 6 oder 7, wobei das erste Verarbeitungsmodul Folgendes umfasst:
eine erste Beurteilungseinheit, konfiguriert für das Bestimmen, gemäß dem Gerätetyp und/oder dem Diensttyp des Drahtlosendgeräts und der Geräteleistungsfähigkeit des ersten Zugriffsknotens, ob die Geräteleistungsfähigkeit des ersten Zugriffsknotens den Gerätetyp und/oder den Diensttyp des Drahtlosendgeräts unterstützt;
eine zweite Beurteilungseinheit, für Folgendes konfiguriert:
wenn die Geräteleistungsfähigkeit des ersten Zugriffsknotens den Gerätetyp und/oder den Diensttyp des Drahtlosendgeräts nicht unterstützt, Bestimmen, gemäß dem Gerätetyp und/oder dem Diensttyp des Drahtlosendgeräts und einer Geräteleistungsfähigkeit eines zweiten Zugriffsknotens, ob die Geräteleistungsfähigkeit des zweiten Zugriffsknotens den Gerätetyp und/oder den Diensttyp des Drahtlosendgeräts unterstützt, wobei der zweite Zugriffsknoten ein anderer Zugriffsknoten als der erste Zugriffsknoten ist, auf den das Drahtlosendgerät zugreifen kann; und
eine zweite Bestimmungseinheit, konfiguriert für das Verwenden des zweiten Zugriffsknotens als Zielzugriffsknoten, wenn die Geräteleistungsfähigkeit des zweiten Zugriffsknotens den Gerätetyp und/oder den Diensttyp des Drahtlosendgeräts unterstützt.

10. Vorrichtung nach einem der Ansprüche 6, 7 oder 9, wobei das erste Angabemodul Folgendes umfasst:
eine erste Angabesendeeinheit, für Folgendes konfiguriert:
wenn der Zielzugriffsknoten der zweite von dem ersten Zugriffsknoten verschiedene Zugriffsknoten ist, auf den das Drahtlosendgerät zugreifen kann, Senden einer ersten Registrierungsantwort an den ersten Zugriffsknoten als Antwort auf die erste Registrierungsanforderung, wobei die erste Registrierungsantwort Umleitungsinformationen enthält, um das Drahtlosendgerät anzuweisen, eine Verbindung mit dem zweiten Zugriffsknoten herzustellen;
eine erste Angabeempfangseinheit, konfiguriert für das Empfangen einer zweiten Registrierungsanforderung, die von dem zweiten Zugriffsknoten gesendet wird, wobei die zweite Registrierungsanforderung eine Verbindungsanforderung ist, die gesendet wird, wenn das Drahtlosendgerät gemäß den Umleitungsinformationen eine Verbindung mit dem zweiten Zugriffsknoten herstellt; und
eine erste Angabeverarbeitungseinheit, konfiguriert für das Anweisen, gemäß der zweiten Registrierungsanforderung, der ersten Angabesendeeinheit, an den zweiten Zugriffsknoten eine zweite Registrierungsantwort zu senden, die verwendet wird, um anzugeben, dass das Kernnetzwerkgerät die zweite Registrierungsanforderung akzeptiert.

## Revendications

1. Procédé d'accès aux communications sans fil destiné à être utilisé dans un réseau de communication, le réseau de communication comprenant de multiples nœuds d'accès auxquels peut accéder un terminal sans fil, dans lequel les multiples nœuds d'accès comprennent un premier nœud d'accès et un ou plusieurs seconds nœuds d'accès, dans lequel le procédé comprend :
la réception (S101), par un dispositif de réseau central, d'une première demande d'enregistrement envoyée par le premier nœud d'accès, dans lequel la première demande d'enregistrement contient un type de dispositif et/ou un type de service du terminal sans fil ;
la détermination (S103), par le dispositif de réseau central selon le type de dispositif et/ou le type de service du terminal sans fil et une capacité de dispositif des nœuds d'accès auxquels le terminal sans fil peut accéder, de l'un des nœuds d'accès dont la capacité de dispositif peut prendre en charge le type d'appareil et/ou le type de service du terminal sans fil en tant que nœud d'accès cible ; et
la commande (S105), par le dispositif de réseau central, au terminal sans fil d'accéder à un réseau à l'aide du nœud d'accès cible, dans lequel après la détermination, par le dispositif de réseau central selon le type de dispositif et/ou le type de service du terminal sans fil et une capacité de dispositif d'un nœud d'accès auquel peut accéder le terminal sans fil, d'un nœud d'accès dont la capacité de dispositif peut prendre en charge le type de dispositif et/ou le type de service du terminal sans fil en tant que nœud d'accès cible, le procédé comprend en outre :
s'il n'y a pas de nœud d'accès dont la capacité d'appareil prend en charge le type d'appareil et/ou le type de service du terminal sans fil, la mise en correspondance, par l'appareil de réseau central, de la qualité de service requise par le type d'appareil et/ou le type de service du terminal sans fil avec une qualité de service fournie par le nœud d'accès auquel le terminal sans fil peut accéder ;
la détermination, par le dispositif de réseau central, d'un nœud d'accès ayant un degré de correspondance de qualité de service le plus élevé en tant que nœud d'accès cible secondaire ; et
la commande, par le dispositif de réseau central, au terminal sans fil d'accéder au réseau à l'aide du nœud d'accès cible secondaire.

2. Procédé selon la revendication 1, dans lequel la première demande d'enregistrement contient en outre une capacité de dispositif du premier nœud d'accès.

3. Procédé selon la revendication 1 ou 2, dans lequel la détermination, par le dispositif de réseau central selon le type de dispositif et/ou le type de service du terminal sans fil et une capacité de dispositif d'un nœud d'accès auquel peut accéder le terminal sans fil, d'un nœud d'accès dont la capacité de dispositif peut prendre en charge le type de dispositif et/ou le type de service du terminal sans fil en tant que nœud d'accès cible comprend :
le fait de déterminer, par le dispositif de réseau central selon le type de dispositif et/ou le type de service du terminal sans fil et la capacité de dispositif du premier nœud d'accès, si la capacité de dispositif du premier nœud d'accès prend en charge le type de dispositif et/ou le type de service de terminal sans fil ; et
l'utilisation, par le dispositif de réseau central, du premier nœud d'accès comme nœud d'accès cible si la capacité de dispositif du premier nœud d'accès prend en charge le type de dispositif et/ou le type de service du terminal sans fil.

4. Procédé selon la revendication 1 ou 2, dans lequel la détermination, par le dispositif de réseau central selon le type de dispositif et/ou le type de service du terminal sans fil et une capacité de dispositif d'un nœud d'accès auquel peut accéder le terminal sans fil, d'un nœud d'accès dont la capacité de dispositif peut prendre en charge le type de dispositif et/ou le type de service du terminal sans fil en tant que nœud d'accès cible comprend :
le fait de déterminer, par le dispositif de réseau central selon le type de dispositif et/ou le type de service du terminal sans fil et la capacité de dispositif du premier nœud d'accès, si la capacité de dispositif du premier nœud d'accès prend en charge le type de dispositif et/ou le type de service de terminal sans fil ; et
si la capacité d'appareil du premier nœud d'accès ne prend pas en charge le type d'appareil et/ou le type de service du terminal sans fil, le fait de déterminer, par le dispositif de réseau central en fonction du type d'appareil et/ou du type de service du terminal sans fil et une capacité de dispositif d'un second nœud d'accès, si la capacité de dispositif du second nœud d'accès prend en charge le type de dispositif et/ou le type de service du terminal sans fil, le second nœud d'accès étant un nœud d'accès auquel le terminal sans fil peut accéder autre que le premier nœud d'accès ; et
l'utilisation, par le dispositif de réseau central, du second nœud d'accès comme nœud d'accès cible si la capacité de dispositif du second nœud d'accès prend en charge le type de dispositif et/ou le type de service du terminal sans fil.

5. Procédé selon l'une quelconque des revendications 1, 2 ou 4, dans lequel si le nœud d'accès cible est le second nœud d'accès auquel peut accéder le terminal sans fil autre que le premier nœud d'accès, la commande, par le dispositif de réseau central, au terminal sans fil d'accéder à un réseau à l'aide du nœud d'accès cible comprend :
l'envoi, par le dispositif de réseau central, d'une première réponse d'enregistrement en réponse à la première demande d'enregistrement au premier nœud d'accès, dans lequel la première réponse d'enregistrement contient des informations de redirection pour commander au terminal sans fil de se connecter au second nœud d'accès ;
la réception, par le dispositif de réseau central, d'une seconde demande d'enregistrement envoyée par le second nœud d'accès, dans lequel la seconde demande d'enregistrement est une demande de connexion qui est envoyée lorsque le terminal sans fil se connecte au second nœud d'accès selon les informations de redirection ; et
l'envoi, par le dispositif de réseau central, d'une seconde réponse d'enregistrement en réponse à la seconde demande d'enregistrement au second nœud d'accès selon la seconde demande d'enregistrement.

6. Appareil de communication destiné à être utilisé dans un réseau de communication, le réseau de communication comprenant de multiples nœuds d'accès auxquels peut accéder un terminal sans fil, dans lequel les multiples nœuds d'accès comprennent un premier nœud d'accès et un ou plusieurs seconds nœuds d'accès, dans lequel l'appareil comprend :
un premier module de réception (11), configuré pour recevoir une première demande d'enregistrement envoyée par le premier nœud d'accès, dans lequel la première demande d'enregistrement contient un type de dispositif et/ou un type de service du terminal sans fil ;
un premier module de traitement (12), configuré pour déterminer, selon le type d'appareil et/ou le type de service du terminal sans fil et une capacité d'appareil des nœuds d'accès accessibles par le terminal sans fil, l'un des nœuds d'accès dont la capacité du dispositif peut prendre en charge le type de dispositif et/ou le type de service du terminal sans fil en tant que nœud d'accès cible ; et
un premier module d'indication (13), configuré pour commander au terminal sans fil d'accéder à un réseau à l'aide du nœud d'accès cible, dans lequel le premier module de traitement est en outre configuré pour :
s'il n'y a pas de nœud d'accès dont la capacité d'appareil prend en charge le type d'appareil et/ou le type de service du terminal sans fil, mettre en correspondance la qualité de service requise par le type d'appareil et/ou le type de service du terminal sans fil avec une qualité de service qui est fournie par le nœud d'accès auquel peut accéder le terminal sans fil, et déterminer un nœud d'accès ayant un degré de correspondance de qualité de service le plus élevé en tant que nœud d'accès cible secondaire ; et
le premier module d'indication est en outre configuré pour commander au terminal sans fil d'accéder au réseau à l'aide du nœud d'accès cible secondaire.

7. Appareil selon la revendication 6, dans lequel la première demande d'enregistrement contient en outre une capacité de dispositif du premier nœud d'accès.

8. Appareil selon la revendication 6 ou 7, dans lequel le premier module de traitement comprend :
une première unité d'évaluation, configurée pour déterminer, selon le type de dispositif et/ou le type de service du terminal sans fil et la capacité de dispositif du premier nœud d'accès, si la capacité de dispositif du premier nœud d'accès prend en charge le type de dispositif et/ou le type de service du terminal sans fil ; et
une première unité de détermination, configurée pour utiliser le premier nœud d'accès comme nœud d'accès cible si la capacité de dispositif du premier nœud d'accès prend en charge le type de dispositif et/ou le type de service du terminal sans fil.

9. Appareil selon la revendication 6 ou 7, dans lequel le premier module de traitement comprend :
une première unité d'évaluation, configurée pour déterminer, selon le type de dispositif et/ou le type de service du terminal sans fil et la capacité de dispositif du premier nœud d'accès, si la capacité de dispositif du premier nœud d'accès prend en charge le type de dispositif et/ou le type de service du terminal sans fil ;
une seconde unité d'évaluation, configurée pour :
si la capacité d'appareil du premier nœud d'accès ne prend pas en charge le type d'appareil et/ou le type de service du terminal sans fil, déterminer, selon le type d'appareil et/ou le type de service du terminal sans fil et une capacité d'appareil d'un second nœud d'accès, si la capacité de dispositif du second nœud d'accès prend en charge le type de dispositif et/ou le type de service du terminal sans fil, le second nœud d'accès étant un nœud d'accès auquel le terminal sans fil peut accéder autre que le premier nœud d'accès ; et
une seconde unité de détermination, configurée pour utiliser le second nœud d'accès comme nœud d'accès cible si la capacité de dispositif du second nœud d'accès prend en charge le type de dispositif et/ou le type de service du terminal sans fil.

10. Appareil selon l'une quelconque des revendications 6, 7 ou 9, dans lequel le premier module d'indication comprend :
une première unité d'envoi d'indication, configurée pour :
si le nœud d'accès cible est le second nœud d'accès auquel peut accéder le terminal sans fil autre que le premier nœud d'accès, envoyer une première réponse d'enregistrement en réponse à la première demande d'enregistrement au premier nœud d'accès, la première réponse d'enregistrement contenant la redirection des informations pour commander au terminal sans fil de se connecter au second nœud d'accès ;
une première unité de réception d'indication, configurée pour recevoir une seconde demande d'enregistrement envoyée par le second nœud d'accès, dans lequel la seconde demande d'enregistrement est une demande de connexion qui est envoyée lorsque le terminal sans fil se connecte au second nœud d'accès selon les informations de redirection ; et
une première unité de traitement d'indication, configurée pour commander, selon la seconde demande d'enregistrement, à la première unité d'envoi d'indication d'envoyer, au second nœud d'accès, une seconde réponse d'enregistrement utilisée pour indiquer que le dispositif de réseau central accepte la seconde demande d'enregistrement.
